# EUROPÄISCHE PATENTSCHRIFT

(11) **EP 2 853 149 B1**
(45) Veröffentlichungstag und Bekanntmachung des Hinweises auf die Patenterteilung: **13.01.2016**
(21) Anmeldenummer: 14184294.8
(22) Anmeldetag: 10.09.2014
(51) Int. Cl.: A01G 3/04

(54) **Vorrichtung zum Entfernen von Pflanzenteilen von einer Wuchshilfe**
Device for stripping shoots or plants from trellis
Dispositif de tirage de sarments de vignes

(30) Priorität: 27.09.2013 DE 102013219651
(43) Veröffentlichungstag der Anmeldung: 01.04.2015
(73) Patentinhaber: ERO-GERÄTEBAU GmbH, 55469 Niederkumbd (DE)
(72) Erfinder: Heidberg, Carsten, 56850 Raversbeuren (DE)
(74) Vertreter: Lemcke, Brommer & Partner Patentanwälte Partnerschaft mbB

(56) Entgegenhaltungen:
- EP-A1- 2 486 789
- WO-A2-2009/051498
- WO-A2-2012/023115

## Beschreibung

Die Erfindung betrifft eine Vorrichtung zum Entfernen von Pflanzenteilen von mindestens einer länglichen, zugstabilen, biegeschlaffen Wuchshilfe während einer Bewegung der Vorrichtung entlang der Wuchshilfe, wobei die Wuchshilfe die Vorrichtung durchläuft gemäß dem Oberbegriff des Anspruchs 1.

Bei dem Anbau von Pflanzen sind längliche, zugstabile, biegeschlaffe Wuchshilfen wie beispielsweise Seile oder Drähte bekannt, um die Pflanzen zu stützen und/oder den Wuchs der Pflanzen zu beeinflussen. So ist beispielsweise im Weinbau die Verwendung von Spalierdrähten bekannt, beispielsweise bei der Guyot- und auch bei der Kordonerziehung.

Bei dem Anbau von Pflanzen mittels vorgenannter Wuchshilfen ist es typischerweise zu bestimmten Zeitpunkten wünschenswert, Pflanzenteile abzutrennen und die an den Wuchshilfen noch anhaftenden, abgetrennten Pflanzenteile zu entfernen. So ist es beispielsweise im Weinbau üblich, Rebentriebe abzutrennen, beispielsweise mittels eines motorisch angetriebenen Vorschneiders. Eine Vielzahl von abgetrennten Rebentrieben bleibt jedoch nach dem Abtrennen von der Rebenpflanze an der Wuchshilfe haften, aufgrund von Verrankung oder zumindest teilweisem Umschließen der Wuchshilfe durch den Rebentrieb oder einzelne Fortsätze des Rebentriebs.

Das Entfernen der an der Wuchshilfe anhaftenden Pflanzenteile erfolgt üblicherweise manuell und stellt einen aufwändigen, mühsamen Arbeitsvorgang dar. Aus WO 2009/051498 A2 ist eine Vorrichtung und ein Verfahren zum Entfernen von Pflanzenteilen von einer Wuchshilfe bekannt, wobei die an der Wuchshilfe anhaftenden Pflanzenteile mittels einer Pflanzenzuführungseinheit komprimiert und/oder zu einer Ablöseeinheit zugeführt werden. Die Ablöseeinheit umfasst mindestens ein Ablöseelement wie beispielsweise ein rotierendes Schneidmesser, mittels dessen die Pflanzenteile zumindest teilweise von der Wuchshilfe abgelöst werden. Weiterhin wird die Wuchshilfe während des Bearbeitungsvorgangs mittels einer Wuchshilfeführung geführt, um insbesondere eine Beschädigung der Wuchshilfeführung durch das Ablöseelement zu vermeiden. Grundsätzlich ist es möglich, mittels dieser Vorrichtung im Weinbau nach dem händischen Schneiden der Reben die abgeschnittenen, noch an den Wuchshilfen anhaftenden Rebentriebe zu entfernen und auf die Verwendung eines motorisch angetriebenen Vorschneiders zu verzichten. Diese Vorrichtung weist gegenüber vorbekannten Vorschneidern den Vorteil auf, dass die Anwendung nicht auf Weinberge mit Kordonerziehung beschränkt ist.

Grundsätzlich problematisch bei dem Entfernen von Pflanzenteilen von der Wuchshilfe ist, dass die Pflanzenteile unregelmäßig gewachsen und insbesondere nach einem Abschneiden von der Hauptpflanze in unterschiedlichsten Richtungen und in unterschiedlichen Längen von der Wuchshilfe abstehen können, so dass hohe Anforderungen an das Verfahren und die Vorrichtung zum Entfernen aller Ausgestaltungen der Pflanzenteile bestehen. Darüber hinaus können die Pflanzenteile durch Umwicklungen und/oder Verästelungen eine stabile Verbindung mit der Wuchshilfe aufweisen, die schwierig zu lösen ist. Aus EP 2 486 786 A1 und EP 2 486 787 B1 ist eine Vorrichtung bekannt, welche mittels einer eingangsseitig angeordneten Schnecke ein Drehen etwaiger abstehender Pflanzenteile wie beispielsweise Ruten einer Rebe in eine bevorzugte Einzugsrichtung einer Pflanzenführungseinheit bewirkt.

Eine weitere Vorrichtung ist aus EP 2 486 789 A1 bekannt.

Der vorliegenden Erfindung liegt die Aufgabe zugrunde, die Fehleranfälligkeit der vorbekannten Vorrichtung weiter zu reduzieren und somit aus Fehlfunktionen bei der Benutzung resultierende notwendige Unterbrechungen des Arbeitsablaufs zu verringern.

Gelöst ist diese Aufgabe durch eine Vorrichtung gemäß Anspruch 1. Vorteilhafte Ausgestaltungen der erfindungsgemäßen Vorrichtung finden sich in den Ansprüchen 2 bis 15. Hiermit wird der Wortlaut sämtlicher Ansprüche durch ausdrückliche Bezugnahme in die Beschreibung aufgenommen.

Die erfindungsgemäße Vorrichtung zum Entfernen von Pflanzenteilen von mindestens einer länglichen, zugstabilen, biegeschlaffen Wuchshilfe während einer Bewegung der Vorrichtung entlang der Wuchshilfe umfasst eine Wuchshilfeführung, zum Führen der Wuchshilfe während der Bewegung der Vorrichtung entlang der Wuchshilfe. Weiterhin umfasst die Vorrichtung eine Ablöseeinheit. Die Vorrichtung umfasst weiterhin eine Pflanzenführungseinheit zum Komprimieren und/oder Zuführen der an der Wuchshilfe anhaftenden Pflanzenteile zu der Ablöseeinheit.

Die Ablöseeinheit umfasst mindestens ein Ablöseelement, welches Ablöseelement derart beweglich an der Vorrichtung angeordnet ist, dass bei Betrieb durch Bewegung des Ablöseelementes Pflanzenteile von der Wuchshilfe zumindest teilweise ablösbar sind.

Das Ablöseelement ist auf einer Welle angeordnet. Die Welle ist mittels eines motorischen Antriebs der Vorrichtung drehbar zur Bewegung des Ablöseelementes.

Wesentlich ist, dass die Vorrichtung eine Führungsrolle für die Wuchshilfe umfasst, welche Führungsrolle drehbar relativ zu der Welle angeordnet ist, wobei Führungsrolle und Welle eine gemeinsame Drehachse aufweisen.

Die Erfindung ist in der Erkenntnis begründet, dass bei den vorbekannten Vorrichtungen eine Vielzahl der notwendigen Unterbrechungen des Bearbeitungsvorgangs aufgrund einer Beschädigung und insbesondere eines Durchtrennens der Wuchshilfe erfolgt und darüber hinaus auch bei nicht durchtrennter Wuchshilfe diese Beschädigungen durch beispielsweise mechanischen Abrieb aufweisen kann, welche in einem späteren Verfahrensgang zu einem Reißen der Wuchshilfe führen können.

Durch das Vorsehen der Führungsrolle, welche drehbar relativ zu der Welle angeordnet ist, ist eine Führung der Wuchshilfe im Bereich der Ablöseeinheit möglich, wobei dadurch, dass die Führungsrolle drehbar relativ zu der Welle angeordnet ist, die Führungsrolle sich nicht zwingend mit der Drehgeschwindigkeit der Welle dreht, sondern Drehgeschwindigkeit und insbesondere auch Drehrichtung der Führungsrolle durch die Relativgeschwindigkeit zwischen Vorrichtung und Wuchshilfe bestimmt wird, so dass kein oder kaum Abrieb und sonstige mechanische Belastung durch die Führung der Wuchshilfe mittels der Führungsrolle erfolgt.

Vorzugsweise ist die Wuchshilfeführung als vorgeschriebene Führungsrolle ausgebildet. Ebenso liegt es im Rahmen der Erfindung, dass die Wuchshilfeführung zusätzlich zu der Führungsrolle weitere Komponenten aufweist.

Um eine hohe Laufruhe und geringe mechanische Belastung der Wuchshilfe zu erzielen, ist die Führungsrolle vorzugsweise konzentrisch zu der Welle angeordnet.

Die Führungsrolle kann in an sich bekannter Weise für Führungsrollen beispielsweise für Drähte oder Seile ausgebildet sein. Insbesondere weist die Führungsrolle bevorzugt in axialer Richtung an den Rändern einen größeren Durchmesser aus als in einem inneren Führungsbereich. Insbesondere weist die Führungsrolle in axialer Richtung an den Rändern jeweils einen von innen nach außen ansteigenden Durchmesser, vorzugsweise monoton ansteigenden Durchmesser, insbesondere streng monoton ansteigenden Durchmesser, bevorzugt linear ansteigenden Durchmesser auf. Hierdurch ist eine möglichst in Axialrichtung mittige Führung der Wuchshilfe durch die Führungsrolle gewährleistet.

Eine insbesondere gute Führung bietet die Führungsrolle, indem im axialen Querschnitt ein in etwa trapezförmiger Führungsbereich ausgebildet ist.

Die Beeinträchtigung der Wuchshilfe in Kontakt mit der Führungsrolle kann in einer vorzugsweisen Ausführungsform weiter verringert werden, indem die Führungsrolle zumindest an den äußeren Umfangslinien abgerundete Kanten aufweist, insbesondere, indem alle bei der Benutzung der Wuchshilfe zugewandten Kanten der Führungsrolle abgerundet sind.

Die Wuchshilfeführung ist vorzugsweise zumindest teilweise im Wirkungsbereich des Ablöseelementes angeordnet. Insbesondere umfasst das Ablöseelement bevorzugt mehrere messerartige Elemente, welche in Axialrichtung beabstandet auf der Welle angeordnet sind, so dass ein Drehen der Welle eine kreisförmige Bewegung der messerartigen Elemente zum Entfernen der Pflanzenteile von der Wuchshilfe bewirkt. Die Führungsrolle ist hierbei bevorzugt in Axialrichtung zwischen mindestens zwei messerartigen Ablöseelementen angeordnet. In diesem Fall ist die Führungsrolle somit im Wirkungsbereich der Ablöseelemente angeordnet, da von der Wuchshilfe zeitlich abstehende Pflanzenteile unmittelbar von den sich drehenden Messern erfasst und abgetrennt werden.

Insbesondere ist die Führungsrolle bevorzugt in axialer Richtung in etwa mittig zwischen den Ablöseelementen angeordnet.

Zum einfachen Einlegen der Wuchshilfe in einen Führungsbereich der Wuchshilfeführung weist diese bevorzugt einen nach oben offenen Querschnitt des Führungsbereichs auf, insbesondere einen axialen Querschnitt die an sich von Seilrollen bzw. Umlenkrollen bekannt, so dass ein in Axialrichtung seitliches Herausrutschen der Wuchshilfe verhindert wird.

Vorzugsweise umfasst die Wuchshilfeführung zusätzlich einen Wuchshilfekanal, so dass eine zusätzliche Führung neben der Führungsrolle im Wuchshilfekanal erfolgt. Der Wuchshilfekanal weist bevorzugt einen nach oben offenen Querschnitt auf, so dass bei Benutzungsaufnahme ein einfaches Einlegen der Wuchshilfe von oben in den Wuchshilfekanal möglich ist. Insbesondere weist der Wuchshilfekanal bevorzugt einen in etwa U-förmigen Querschnitt auf.

Ein besonders effizienter Schutz der Wuchshilfe vor einer Beschädigung oder Beeinträchtigung durch die Ablöseelemente ergibt sich in einer vorzugsweisen Ausführungsform, in welcher der Wuchshilfekanal in Bewegungsrichtung der Wuchshilfe nach der Führungsrolle angeordnet ist. Ein beliebiger Punkt auf der Wuchshilfe erreicht bei Verwendung der erfindungsgemäßen Vorrichtung somit zuerst die Führungsrolle und anschließend den Wuchshilfekanal. Hierdurch ergibt sich der Vorteil, dass die Wuchshilfe, an welcher Pflanzenteile anhaften, zunächst ohne einen Wuchshilfekanal zu der Führungsrolle geführt wird, so dass keine störende Interaktion zwischen Pflanzenteilen und Führungskanal auftritt. Die Führungsrolle befindet sich wie zuvor beschrieben auf der Welle, an welcher das oder die Ablöseelemente angeordnet sind, so dass bei Passieren der Führungsrolle durch die Wuchshilfe die Pflanzenteile abgetrennt werden. Anschließend durchläuft die Wuchshilfe - nun ohne anhaftende Pflanzenteile - den Führungskanal, der eine zusätzliche Stabilisierung der Bahn der Wuchshilfe bewirkt.

In einer weiteren vorzugsweisen Ausführungsform umfasst die Vorrichtung zumindest zwei Führungsscheiben, welche Führungsscheiben bevorzugt drehfest auf der Welle angeordnet sind. Diese Führungsscheiben bieten somit den Vorteil, dass sie die gleiche Drehgeschwindigkeit wie die Ablöseelemente aufweisen und somit einen effektiven Schutz bieten, dass abgelöste Pflanzenteile nicht auf die Wuchshilfe einwirken.

Insbesondere ist es daher vorteilhaft, dass die Führungsrolle zwischen den Führungsscheiben angeordnet ist.

Hierbei ergaben Untersuchungen der Erfinder, dass die Führungsrollen bevorzugt einen axialen Abstand im Bereich von 0,1 mm bis 20 mm, bevorzugt 0,2 mm bis 10 mm, weiter bevorzugt 0,3 mm bis 7 mm zu der Führungsrolle aufweisen. Hierdurch ist gewährleistet, dass einerseits ein ausreichender Toleranzabstand besteht, so dass keine Berührung zwischen Führungsscheiben und Führungsrolle erfolgt und andererseits der Abstand klein genug gewählt ist, so dass ein Einklemmen von Pflanzenteilen zwischen Führungsscheiben und den axialen Außenflächen der Führungsrolle vermieden oder zumindest in den meisten Fällen verhindert wird. Weiterhin wird hierdurch ein Einklemmen der Wuchshilfe vermieden.

Vorzugsweise sind Welle und Führungsrolle im Wesentlichen aus Metall ausgebildet. Insbesondere sind bevorzugt ebenso die Ablöseelemente und die Führungsscheiben aus Metall ausgebildet.

Ein besonders effizienter Schutz der Führungsrolle von abgetrennten Pflanzenteilen und gegen ein Einklemmen der Wuchshilfe ergibt sich in der vorzugsweisen Ausführungsform, in welcher die Führungsscheiben die äußeren Ränder der Führungsrolle übergreifen, insbesondere in Axialrichtung eine Länge im Bereich 1 mm bis 20 mm bevorzugt 2 mm bis 10 mm der äußeren Ränder der Führungsrolle übergreifen.

In dieser vorzugsweisen Ausführungsform weisen die Führungsscheiben somit den der Führungsrolle zugewandten Seiten jeweils eine zylinderförmige Ausnehmung auf, wobei der Radius dieser Ausnehmung größer, bevorzugt im Bereich 0,5 mm bis 10 mm, insbesondere etwa 1 mm größer als der Außenradius der Ränder der Führungsrolle ist. Die in Axialrichtung der äußeren Ränder der Führungsrolle sind in die zuvor beschriebenen zylindrischen Ausnehmungen der Führungsscheiben eingebettet, ohne jedoch die Führungsscheiben zu berühren,

In einer weiteren vorzugsweisen Ausführungsform wird ein besonderer Schutz der Führungsrolle von abgetrennten Pflanzenteilen dadurch erzielt, dass die äußeren Führungsscheiben einen größeren Durchmesser als die Führungsrolle aufweisen, insbesondere bevorzugt einen um 0,5 cm bis 5 cm, bevorzugt etwa 2 cm größeren Durchmesser. Hierdurch wir darüber hinaus ein Einklemmen der Wuchshilfe verhindert.

Die Führungsrolle ist bevorzugt drehbar auf der Welle gelagert, insbesondere bevorzugt mittels eines Gleitlagers oder eines Wälzlagers, insbesondere eines Kugellagers.

Die Führungsrolle der erfindungsgemäßen Vorrichtungen bietet somit eine Führung für die Wuchshilfe bevorzugt in dem Wirkungsbereich der Ablöseeinheit. Untersuchungen der Erfinder haben gezeigt, dass weiterhin vor der Ablöseeinheit der Vorrichtung in einer vorzugsweisen Ausführungsform zusätzliche Einführhilfen vorteilhaft sind, welche eine Bewegung der Wuchshilfe zumindest horizontal rechts und links begrenzen. Diese horizontale Begrenzung nach rechts und links bietet somit im Zusammenspiel mit der Führung durch die Führungsrolle einen in etwa dreieckigen oder pyramidenstumpfförmigen Führungsbereich für die Wuchshilfe aus, der bevorzugt derart ausgebildet ist, dass die Wuchshilfe innerhalb dieses Führungsbereichs nicht in Kontakt mit einem Ablöseelement gelangen kann.

Insbesondere ist es vorteilhaft, die seitlichen Einführhilfen motorisch angetrieben auszubilden: In einer weiteren vorzugsweisen Ausführungsform ist in Durchlaufrichtung der Wuchshilfe die Pflanzenführungseinheit vor der Ablöseeinheit und vor der Wuchshilfeführung angeordnet und die Vorrichtung weist zumindest zwei motorisch angetriebene Einführhilfen auf, die in Durchlaufrichtung der Wuchshilfe vor der Pflanzenführungseinheit angeordnet sind.

Die Einführhilfen sind derart angeordnet und mit der Pflanzenführungseinheit zusammengebildet, dass bei Benutzung der Vorrichtung die Wuchshilfe zwischen den beiden Einführhilfen hindurchläuft, so dass die Einführhilfe im Einführbereich von Wuchshilfe und Pflanzen in die Pflanzenführungseinheit zumindest horizontal nach rechts und links begrenzen. Hierdurch ergibt sich die zuvor beschriebene vorteilhafte weitere Risikoverringerung einer Berührung zwischen Ablöseelement und Wuchshilfe. Weiterhin ist diese vorzugsweise Ausführungsform in der Erkenntnis begründet, so dass bei den vorbekannten Vorrichtungen die notwendigen Unterbrechungen aufgrund einer Beschädigung der Wuchshilfe oder ein Unterbrechen oder verlangsamen der Bearbeitung aufgrund eines Ansammelns größerer Mengen von Pflanzenresten vor der Pflanzenführungseinheit eine erhebliche Beeinträchtigung bei der Verwendung der vorbekannten Vorrichtung darstellt. Diese Erkenntnis konnte erst durch aufwändige Versuchsreihen und praktische Anwendung der vorbekannten Vorrichtungen erzielt werden.

Durch das Anordnen der mindestens zwei motorisch angetriebenen Einführhilfen vor der Pflanzenführungseinheit können überraschenderweise zwei Fehlerquellen zumindest weitgehend eliminiert werden:

Zum einen ermöglicht die Kombination der zwei motorisch angetriebenen Einführhilfen zusammen mit der Pflanzenführungseinheit eine kontinuierliche und zuverlässige Zuführung der Pflanzenteile zu der Ablöseeinheit. Zum anderen wird durch die zwei motorisch angetriebenen Einführhilfen der Einführraum der Wuchshilfe in die Vorrichtung zumindest horizontal nach rechts und links begrenzt, so dass ein seitliches Verrutschen der Wuchshilfe insbesondere aufgrund von an der Wuchshilfe anhängenden Pflanzenteilen auf einen vorgegebenen Raum in horizontaler Richtung begrenzt wird, so dass insbesondere eine Kollision der Wuchshilfe mit dem Ablöseelement der Ablöseeinheit vermieden oder zumindest das Risiko einer solchen Kollision erheblich verringert werden kann.

Entgegen vorheriger Annahmen ist es häufig nicht ausreichend, die Orientierung der Pflanzenteile mittels einer entsprechenden Vorrichtung in eine vorteilhafte Einzugsorientierung der Pflanzenführungseinheit zu überführen, wie beispielsweise in EP 2 486 786 A1 ausgeführt. Überraschenderweise ist es vorteilhaft, beidseitig jeweils eine motorisch angetriebene Einführhilfe vorzusehen, wobei die Wuchshilfe zwischen den Einführhilfen verläuft, da hierdurch einerseits das Einführen der Pflanzenteile in die Pflanzenführungseinheit begünstigt und andererseits ein seitliches Verrutschen der Wuchshilfe vermieden wird.

Durch die vorliegende Erfindung wird somit das Verhältnis zwischen Betriebs- und Wartungsdauer bei Benutzen solch einer Vorrichtung weiter verbessert und damit die Wirtschaftlichkeit zusätzlich erhöht.

Vorzugsweise sind Einführhilfen und die Wuchshilfeführung derart angeordnet und zusammenwirkend ausgebildet, dass durch die Einführhilfen und die Wuchshilfeführung ein Begrenzungsraum für in etwa geradlinige Verläufe der Wuchshilfe ausgebildet ist, weicher Begrenzungsraum nicht mit dem Wirkungsbereich des Ablöseelementes der Ablöseeinheit überlappt.

Zumindest bei einem in etwa geradlinigen Verlauf der Wuchshilfe wird deren Verlauf durch die erfindungsgemäße Vorrichtung somit durch Wuchshilfeführung und Einführhilfen derart begrenzt, dass ein Begrenzungsraum ausgebildet wird, der sich nicht mit dem Wirkungsbereich des Ablöseelementes der Ablöseeinheit überlappt, so dass eine Beschädigung der Wuchshilfeführung zumindest bei einem in etwa geradlinigen Verlauf durch das Ablöseelement vermieden wird.

Vorzugsweise ist die Wuchshilfeführung im Bereich der Ablöseeinheit und/oder in Durchlaufrichtung der Wuchshilfe hinter der Ablöseeinheit angeordnet. Insbesondere ist es vorteilhaft, dass durch Zusammenwirkung von Wuchshilfeführung, Einführhilfen und vorteilhafterweise Pflanzenführungseinheit ein in etwa pyramidenförmiger oder pyramidenstumpfförmiger Begrenzungsraum für die Wuchshilfe ausgebildet wird.

Die Pyramidenhöhe oder Höhe des Pyramidenstumpfes erstreckt sich hierbei vorteilhafterweise in etwa parallel zu der Durchlaufrichtung der Wuchshilfe durch die Vorrichtung, vorzugsweise mit einer abnehmenden Querschnittsfläche der Pyramide bzw. des Pyramidenstumpfes in Richtung der Durchlaufrichtung, d. h. dass die Pyramide oder der Pyramidenstumpf sich in Durchlaufrichtung verjüngt. Vorzugweise weist die Pyramide eine viereckige Grundfläche auf, insbesondere bevorzugt ein Trapez, vorzugsweise ein gleichschenkliges Trapez.

Vorzugsweise weist der Begrenzungsraum ausgehend von der Wuchshilfeführung einen horizontalen Öffnungswinkel im Bereich 5° bis 80°, insbesondere im Bereich 10° bis 60° auf. Hierdurch wird eine Optimierung hinsichtlich einer ausreichend großen Einführungsöffnung für Pflanzenteile in die Vorrichtung einerseits und einer Begrenzung möglicher geradliniger Verläufe der Wuchshilfe zur Vermeidung eines Kontakts mit dem Ablöseelement andererseits erzielt.

Vorzugsweise weist die Pflanzenführungseinheit zumindest eine motorisch angetriebene Zuführwalze auf und die Einführhilfen und die Wuchshilfeführung sind derart angeordnet und zusammenwirkend angeordnet, dass durch Einführhilfen und Wuchshilfeführung ein Begrenzungsraum über in etwa geradlinige Verläufe der Wuchshilfe ausgebildet ist, der nicht mit den seitlichen Rändern der Zuführwalze überlappt. Hierdurch wird somit vermieden, dass die Wuchshilfe zumindest bei in etwa geradlinigen Verläufen sich seitlich, d. h. in Durchlaufrichtung rechts oder links bis über einen rechten oder linken seitlichen Rand der Zuführwalze verschiebt. Denn ein Verschieben der Wuchshilfe bis über einen seitlichen Rand der Zuführwalze oder einer als Einzugsrad ausgebildeten Zuführwalze führt meist zu einer Beschädigung, insbesondere einem Durchtrennen der Wuchshilfe. Insbesondere kann meist die Wuchshilfe nur manuell aus dieser Position wieder in eine mittig über die Zuführwalze verlaufende Position gebracht werden. Ein Unterbrechen der Bearbeitung aufgrund eines solchen Fehlers wird somit in dieser vorzugsweisen Ausführungsform vermieden.

Insbesondere ist es vorteilhaft, dass die Einführhilfen derart ausgebildet und angeordnet sind, dass ein Einzugsbereich der Einführhilfe zumindest in Richtung der Drehachse der Zuführwalze seitlich begrenzt wird.

Untersuchungen haben ergeben, dass vorzugsweise die Einführhilfen schräg zueinander angeordnet sind, derart, dass der Abstand der Einführhilfen in einem oberen Bereich geringer ist als in einem unteren Bereich. Die Einführhilfen bilden somit einen trapezförmigen Einführbereich für die Vorrichtung aus, vorzugsweise einen Einführbereich in Form eines symmetrischen Trapezes. Insbesondere ist es vorteilhaft, dass die Einführhilfen an einem oberen Rand nah aneinander angeordnet sind, sich insbesondere an einem oberen Rand der Einführhilfen einen geringeren Abstand aufweisen, als an einem unteren Rand, so dass der Einführbereich in etwa dreieckig, insbesondere in der Form eines gleichschenkligen Dreiecks ausgebildet ist, wobei jede der Einführhilfe einen Schenkel des Dreiecks bildet. Insbesondere bevorzugt schließen die beiden Einführhilfen in Draufsicht von vorne auf die Vorrichtung einen Winkel im Bereich 5° bis 45°, insbesondere im Bereich 10° bis 40° ein. Hierdurch ergibt sich der Vorteil, dass die größere Menge an Pflanzenteilen, welche sich typischerweise in einem unteren Bereich befindet, insbesondere bei mehreren übereinander angeordneten Wuchshilfen an einer unteren Wuchshilfe befindet, im unteren Bereich der Einführhilfe mehr Platz hat.

Ein weiterer Vorteil ist, dass die Einführhilfen oben einen geringeren Abstand aufweisen, besteht darin, dass ein "Hochwandern" der Wuchshilfe verhindert wird. Das "Hochwandern" der Wuchshilfe bringt eine hohe Gefahr mit sich, dass die Wuchshilfe beschädigt bzw. durchtrennt wird.

Die Einführhilfen werden vorzugsweise gegenläufig zueinander angetrieben, so dass die Einführhilfen sich an der der Wuchshilfe zugewandten Seite jeweils in Durchlaufrichtung der Wuchshilfe drehen, d. h. eine Förderwirkung für Pflanzenteile in Richtung der Pflanzenführungseinheit aufweisen. Hierdurch wird in effizienter Weise die Funktion der Pflanzenführungseinheit unterstützt, indem durch den vorgeschalteten Pflanzenführungsvorgang mittels der Einführhilfen bereits ein Einführen der Pflanzenteile in die Pflanzenführungseinheit begünstigt wird.

Vorzugsweise wird die Fördergeschwindigkeit der Einführhilfen abhängig von der Durchlaufgeschwindigkeit der Wuchshilfen gewählt. Dies kann in vorteilhafter Weise durch wählen der Drehgeschwindigkeit der Einführhilfen abhängig von der Durchlaufgeschwindigkeit der Wuchshilfe erfolgen, insbesondere, indem eine Umfangsgeschwindigkeit der Einführhilfen in etwa gleich der Durchlaufgeschwindigkeit der Wuchshilfe gewählt wird. Hierdurch werden somit die Pflanzen in der Geschwindigkeit mittels der Einführhilfen der Pflanzenführungseinheit zugeführt, in welcher auch die Wuchshilfe durch die Vorrichtung verläuft, d. h. in der Geschwindigkeit, mittels derer die Vorrichtung entlang der Wuchshilfe geführt wird. Hierdurch wird insbesondere eine Krafteinwirkung auf die Wuchshilfe, aufgrund einer unterschiedlichen Bewegungsgeschwindigkeit zwischen Pflanzenteile einerseits und Wuchshilfe andererseits vermieden.

Hierbei ist es insbesondere vorteilhaft, die Fahrgeschwindigkeit der Vorrichtung relativ zu der Wuchshilfe zu messen und abhängig von der Fahrgeschwindigkeit die Drehgeschwindigkeit der Einführhilfen zu steuern. Typischerweise wird die erfindungsgemäße Vorrichtung mittels eines Fahrzeugs entlang der Wuchshilfeführung geführt, insbesondere mittels eines Traktors. Es kann somit in vorteilhafter und einfacher Weise die Fahrgeschwindigkeit des Fahrzeugs ermittelt werden und abhängig von dieser Fahrgeschwindigkeit die Drehgeschwindigkeit der Einführhilfen gesteuert werden.

In einer vorzugsweisen Ausführungsform weist jede Einführhilfe zumindest ein drehbar gelagertes, im Wesentlichen zylindrisches Element auf, insbesondere zumindest eine Walze. Hierdurch kann in einfacher Weise jeweils eine motorisch angetriebene Einführhilfe ausgebildet werden, welche die zuvor genannten vorteilhaften Effekte aufweist.

In einer konstruktiv vorteilhaft einfachen Ausführungsform ist jede Einführhilfe jeweils als ein im Wesentlichen zylindrisches Element, insbesondere als eine Walze ausgebildet.

Hierbei ist es insbesondere vorteilhaft, dass jede Einführhilfe eine Querschnittsfläche in Form eines regelmäßigen n-Ecks, mit n im Bereich 3 bis 12, vorzugsweise im Bereich 5 bis 10, insbesondere im Bereich 6 bis 8 ausgebildet ist.

Hierdurch kann in einfacher Weise eine Einführhilfe ausgebildet werden, welche bei motorischem Antreiben um die Zylinderachse einen entsprechenden Fördereffekt wie zuvor beschrieben und gleichzeitig eine seitliche Begrenzung aufweist.

Zur Verbesserung der Förderfunktion der Einführhilfen ist es vorteilhaft, dass jede Einführhilfe kammartige, nach außen vorstehende Transporthilfen aufweist, insbesondere ist es vorteilhaft, dass eine nach außen vorstehende Zahnlänge der Transporthilfen wahlweise durch einen Benutzer veränderbar ist. Die kammartigen Transporthilfen treten in Wechselwirkung und teilweisem Eingriff mit den Pflanzenteilen und erhöhen somit die Förderwirkung. Durch die verstellbare Zahnlänge kann die "Aggressivität" der Förderwirkung, d. h. die Wechselwirkung zwischen Einführhilfe und Pflanzenteil durch den Benutzer variiert werden.

Alternativ oder zusätzlich ist es vorteilhaft, die Transporthilfen radial verschiebbar anzuordnen, so dass durch Verschieben der Transporthilfen der wirksame Durchmesser der jeweiligen Einführhilfe veränderbar ist. Auch hierdurch kann die "Aggressivität" der Förderwirkung, d. h. die Wechselwirkung zwischen Einführhilfe und Pflanzenteil durch den Benutzer variiert werden.

Die kammartigen Transporthilfen können hierbei radial nach außen abstehen. Insbesondere ist es jedoch vorteilhaft, dass die kammartigen Transporthilfen entgegen der Förderrichtung, d. h. gegen die Durchlaufrichtung der Wuchshilfe geneigt sind, hierdurch wird ein Lösen der Pflanzenteile von den Transporthilfen bei Weitergabe der Pflanzenteile an die Pflanzenführungseinheit begünstigt. Weiterhin verhindern die kammartigen Transporthilfen, dass der Draht in vertikaler Richtung nach oben verschoben wird, insbesondere bei Einzug größerer Mengen von Pflanzenteilen.

In einer weiteren vorteilhaften Ausführungsform weist jede Einführhilfe zumindest ein Förderband auf. Hierdurch kann jeweils durch ein Förderband in einfacher Weise eine effiziente Förderfunktion und seitliche Begrenzung realisiert werden.

Vorzugsweise ist jede Einführhilfe jeweils mittels eines motorischen Antriebs angetrieben, insbesondere mittels eines Hydromotors. Hierdurch ist eine konstruktiv einfache Lösung gegeben, insbesondere können handelsübliche Hydromotoren, welche an hydraulische Systeme eines Fahrzeugs zum Transport der Vorrichtung, insbesondere eines Traktors anschließbar sind, verwendet werden.

Es liegt im Rahmen der Erfindung, typische, dem Fachmann bekannte lineare Fördermittel als Einführhilfe zu verwenden, insbesondere eine oder mehrere Walzen oder Förderbänder, wie zuvor ausgeführt. Ebenso liegt die Verwendung von Rollenbahnen im Rahmen der Erfindung.

Es ist insbesondere vorteilhaft, die erfindungsgemäße Vorrichtung grundsätzlich nach der Vorrichtung gemäß WO 2009/051498 A2 bzw. einer vorzugsweisen Ausführungsform hiervon auszubilden. Auf diesen Stand der Technik wird vollumfänglich Bezug genommen und er wird ausdrücklich vollumfänglich per Referenz eingebunden. Die Weiterbildung der vorbekannten Vorrichtung besteht insbesondere in dem Anordnen der Einführhilfen vor der Pflanzenführungseinheit gemäß der erfindungsgemäßen Vorrichtung.

Die Pflanzenführungseinheit der erfindungsgemäßen Vorrichtung ist vorzugsweise zum Führen der Wuchshilfe ausgebildet, insbesondere das Einzugsrad ist vorzugsweise mit einem sich hinsichtlich der Drehachse axial von den Seiten des Einzugsrades jeweils zur Mitte hin verringernden Durchmesser ausgebildet, so dass eine mittige Führung der Wuchshilfe in axialer Richtung der Drehachse des Einzugsrades gewährleistet ist.

Als vorzugsweise Ausführungsform der erfindungsgemäßen Vorrichtung wird insbesondere auf die Figuren 1 bis 11 der WO 2009/051498 und der dazugehörigen Figurenbeschreibung Bezug genommen, wobei einer solchen vorzugsweisen Ausführungsform wie zuvor ausgeführt die Einführhilfen vor der Pflanzenführungseinheit hinzuzufügen ist. Als weitere vorzugsweise Ausführungsform der erfindungsgemäßen Vorrichtung wird insbesondere auf die Figuren 1 bis 9 der EP 2 486 787 B1 und der dazugehörigen Figurenbeschreibung Bezug genommen, wobei einer solchen vorzugsweisen Ausführungsform wie zuvor ausgeführt die Pflanzenausrichteinheit 12 der EP 2 486 787 B1 durch die Einführhilfen der vorliegenden erfindungsgemäßen Vorrichtung zu ersetzen ist.

Weitere Vorteile und Eigenschaften der vorliegenden Erfindung werden im Folgenden anhand von einem Ausführungsbeispiel und den Figuren erläutert. Dabei zeigt:
- Figur 1: ein erstes Ausführungsbeispiel einer erfindungsgemäßen Vorrichtung in isometrischer Ansicht;
- Figur 2: das erste Ausführungsbeispiel in Seitenansicht;
- Figur 3: das erste Ausführungsbeispiel in Draufsicht von oben;
- Figur 4: das erste Ausführungsbeispiel in Draufsicht von oben mit aufgeklapptem Oberteil;
- Figur 5: eine Schnittdarstellung des ersten Ausführungsbeispiels gemäß Figur 4;
- Figur 6: eine Draufsicht auf das erste Ausführungsbeispiel von vorne;
- Figur 7: ein Detail einer Einführhilfe des ersten Ausführungsbeispiels in isometrischer Ansicht;
- Figur 8: eine Seitenansicht (Teilbild a) und eine Schnittansicht (Teilbild b) des Teilelementes gemäß Figur 7;
- Figur 9: ein zweites Ausführungsbeispiel einer erfindungsgemäßen Vorrichtung in Draufsicht von oben;
- Figur 10: das zweite Ausführungsbeispiel in Seitenansicht;
- Figur 11: das zweite Ausführungsbeispiel in Draufsicht von vorne;
- Figur 12: eine Draufsicht auf eine Führungsrolle, welche beide Ausführungsbeispiele aufweisen und
- Figur 13: eine axiale Schnittdarstellung des Bereichs X₁₃ gemäß Figur 12 nebst Detailvergrößerung.

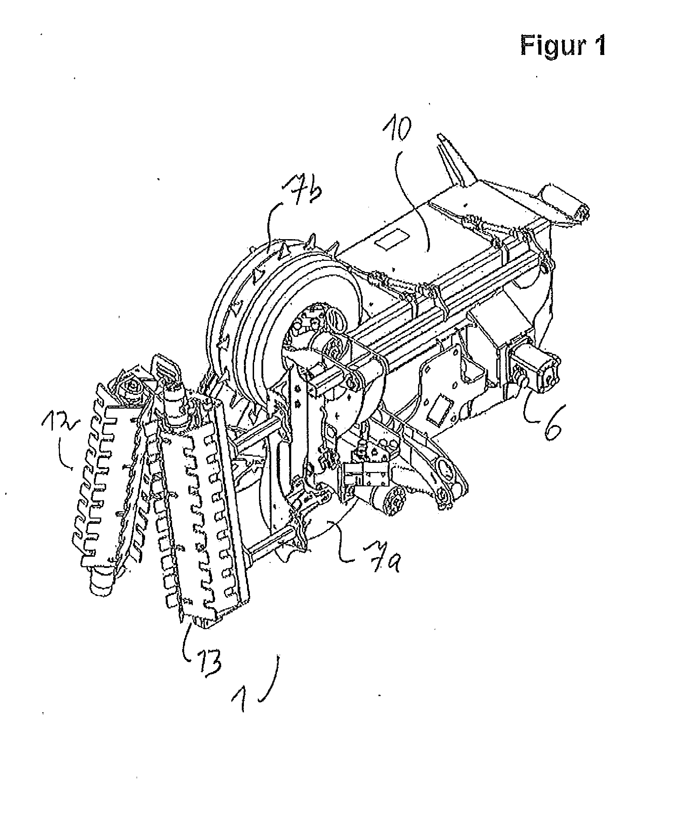

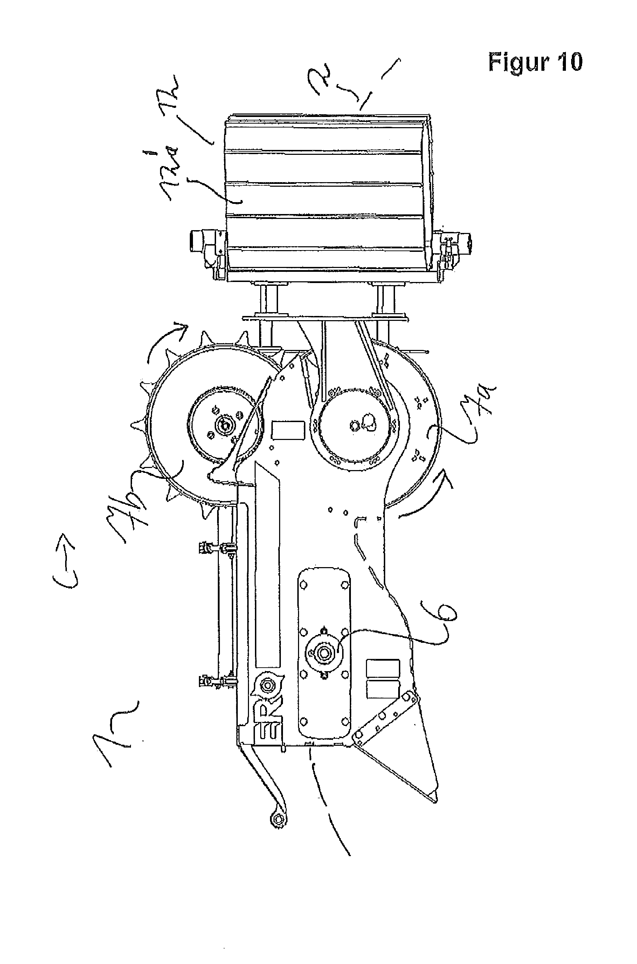

Entsprechend in den Figuren 1 bis 13 bezeichnen gleiche Bezugszeichen gleiche oder gleichwirkende Elemente.

In den Figuren 1 bis 13 bezeichnen gleiche Bezugszeichen gleiche oder gleichwirkende Elemente.

In den Figuren 1 bis 6 ist als erstes Ausführungsbeispiel eine Vorrichtung 1 zum Entfernen von Pflanzenteilen von mindestens einer länglichen, zugstabilen, biegeschlaffen Wuchshilfe dargestellt.

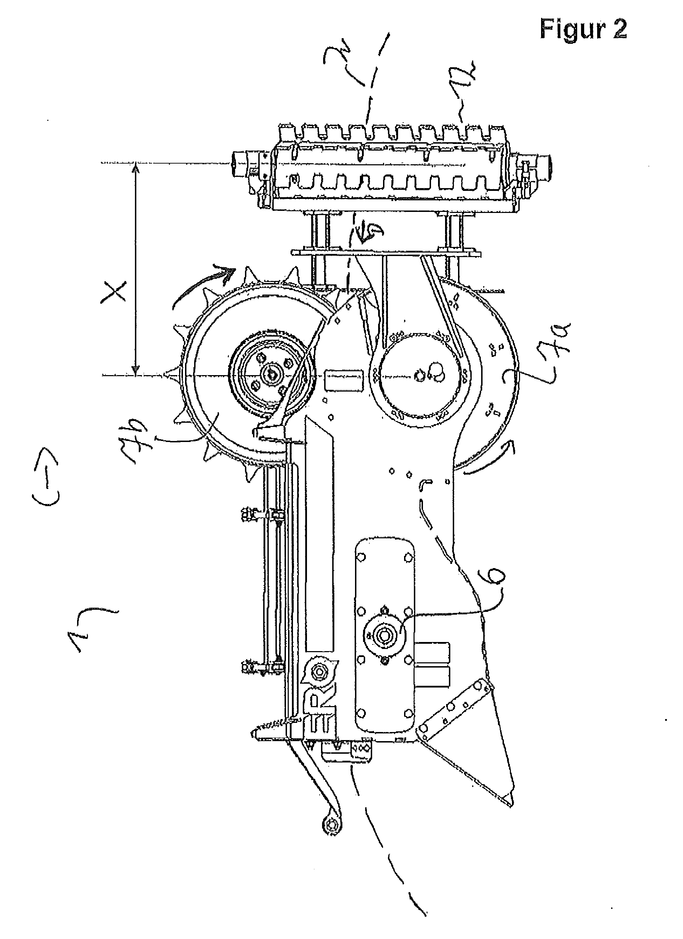

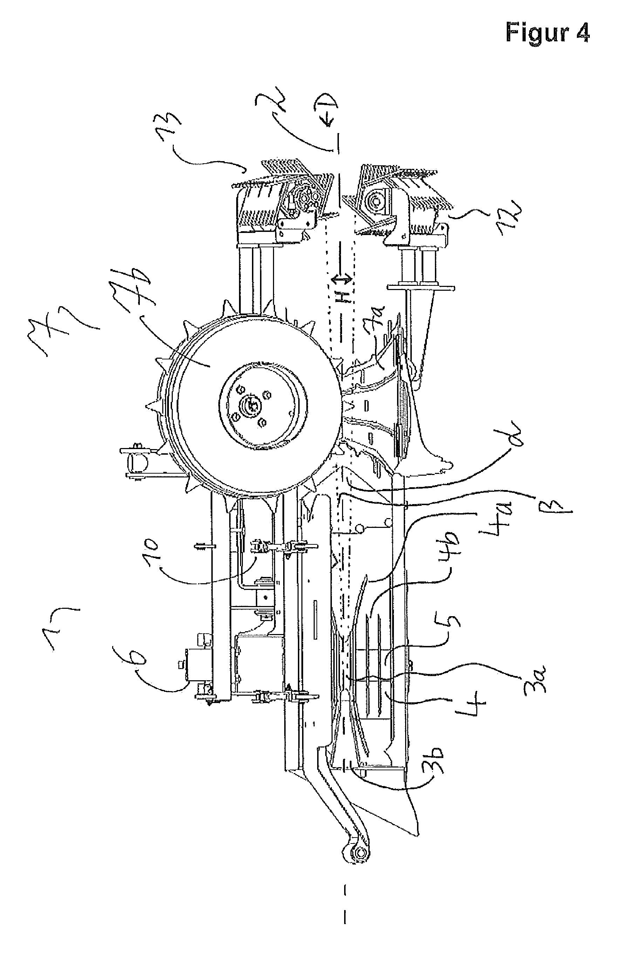

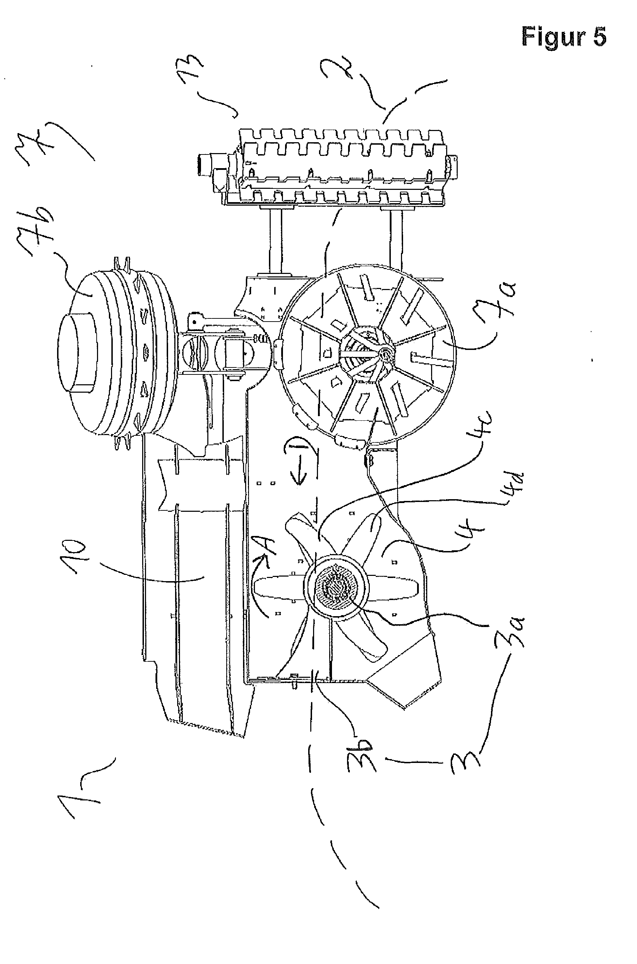

Die Vorrichtung ist zum Entfernen von Pflanzenteilen von beliebigen länglichen, zugstabilen, biegeschlaffen Wuchshilfen geeignet, wie beispielsweise von Seilen oder Drähten. Insbesondere ist die Vorrichtung 1 zum Einsatz im Weinbau geeignet, um Rebentrieben, welche von der Rebe abgeschnitten sind, jedoch noch als an Spalierdrähten ausgebildeten Wuchshilfe anhaften, zu entfernen. In den Figuren 2, 3, 4 und 5 ist zum besseren Verständnis jeweils eine Wuchshilfe 2 als gestrichelte Linie angedeutet. Die Figur 5 stellt hierbei eine seitliche Ansicht in einer Schnittdarstellung dar, wobei die Schnittebene in etwa entlang der Wuchshilfe 2 gemäß Figur 4 verläuft und senkrecht zur Zeichenebene in der Darstellung gemäß Figur 4 liegt.

Die Vorrichtung 1 umfasst eine Wuchshilfeführung 3, welche einen nach oben offener Führungskanal 3b mit einem in etwa U-förmigen Querschnitt senkrecht zur Längsachse einer in der Wuchshilfeführung 3 liegenden Wuchshilfe 2 aufweist. Mittels der Wuchshilfeführung 3 wird die Wuchshilfe 2 insbesondere im Bereich einer Ablöseeinheit 4 der Vorrichtung 1 geführt. Dies ist insbesondere in den Figuren 4 und 5 ersichtlich.

Die Ablöseeinheit 4 umfasst eine Vielzahl von Ablöseelementen, von denen in Figur 4 exemplarisch zwei Ablöseelemente 4a und 4b sowie in Figur 5 zwei diesem gegenüberliegenden Ablöseelemente 4c und 4d gekennzeichnet sind. Die Ablöseelemente sind jeweils als Schneidmesser ausgebildet, welche an einer gemeinsamen Welle 5 angebracht sind und mittels eines Ablöseeinheitmotors 6 in Rotation gemäß Pfeil A in Figur 5 versetzt werden können.

Die Vorrichtung 1 umfasst weiterhin eine Pflanzenführungseinheit 7, welche ein unteres Einzugsrad 7a und ein oberes Einzugsrad 7b umfasst.

Die Einzugsräder 7a und 7b werden mittels eines zweiten Motors 8 gegensinnig angetrieben. Die Drehrichtung ist derart gewählt, dass die der Wuchshiife 2 zugewandte Seite der Einzugsräder 7a und 7b sich jeweils in Durchlaufrichtung der Wuchshilfe (Pfeil D in den Figuren 4 und 5) bewegt. Die Rotationsrichtung ist zusätzlich in Figur 2 durch Pfeile angedeutet.

Zur Verwendung der Vorrichtung 1 wird diese mittels einer seitlich angeordneten Halterung 9 an einer (nicht dargestellten) Haltevorrichtung angebracht, welche Haltevorrichtung wiederum an einem (nicht dargestellten) Traktor angebracht ist. Mittels der Haltevorrichtung kann die Vorrichtung 1 bezüglich der Höhe variiert werden sowie bezüglich der seitlichen Ausrichtung in Fahrtrichtung rechts vor dem Traktor.

Zur Verwendung der Vorrichtung in einem Weinberg mit Kordonerziehung müssen entweder die betreffenden Spalierdrähte per Hand von den Haltemasten entlang einer Weinrebenzeile entfernt werden oder mittels entsprechender Haltevorrichtungen, wie beispielsweise nach oben offenen Klemmhaken, an den Haltemasten angebracht sein, so dass sie nach oben abgezogen werden können. An dem ersten und letzten Mast einer Weinrebenzeile sind die Spalierdrähte unlösbar angebracht.

Zu Beginn wird die Vorrichtung in eine Position nahe des ersten Pfosten gebracht und das obere Einzugsrad 7b sowie eine obere Abdeckung 10 werden durch Verschwenken weggeklappt, so dass sich der Zustand gemäß der Figuren 4 und 5 ergibt. Anschließend wird der Spalierdraht 2 oder gegebenenfalls mehrere Spalierdrähte von oben auf das untere Einzugsrad 7a gelegt und in die Wuchshilfeführung 3 von oben eingeführt. Anschließend werden obere Abdeckung 10 und oberes Einzugsrad 7b wieder in die ursprüngliche Position, wie in den Figuren 1, 2, 3 und 6 dargestellt, gebracht.

Die Wuchshilfen 2 verlaufen somit zwischen oberem Einzugsrad 7b und unterem Einzugsrad 7a (siehe Figur 2) und durch die Wuchshilfeführung 3 hindurch und somit ebenfalls zwischen den Ablöseelementen der Ablöseeinheit 4 hindurch (siehe Figuren 4 und 5).

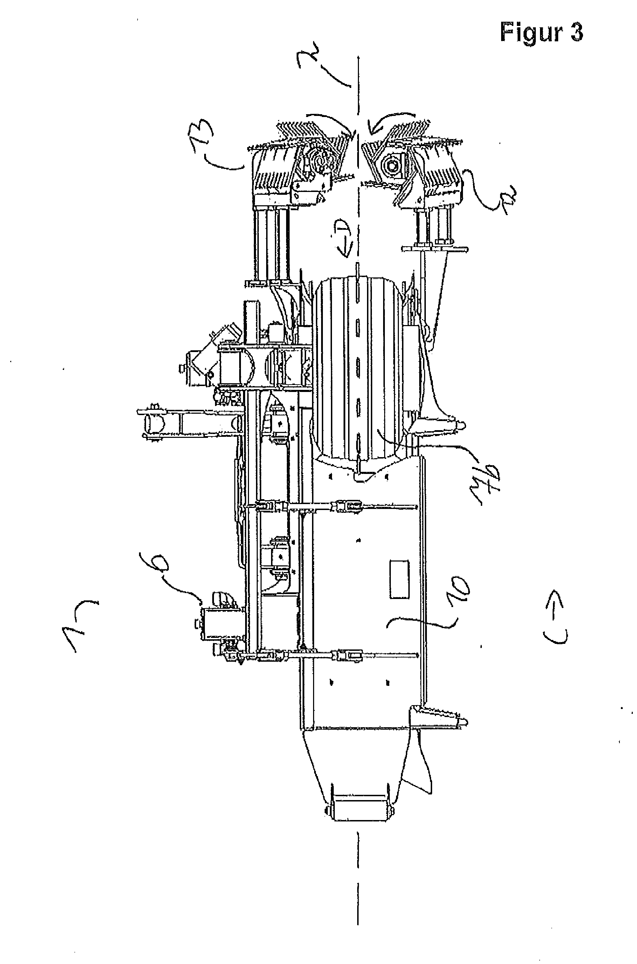

Anschließend wird mittels des Traktors die Vorrichtung 1 oberhalb der Maste der Weinrebenzeile entlanggefahren, so dass die Spalierdrähte 2 nach oben aus den Halterungen der Maste herausgezogen werden, sofern sie nicht bereits vorher aus entsprechenden Halterungen entfernt wurden. Der Traktor fährt nun entlang der Weinrebenzeile, so dass die Wuchshilfen 2 während dieser Bewegung durch die Vorrichtung 1 hindurchgeleitet werden. In den Figuren 2 und 3 ist die Bewegungsrichtung der Vorrichtung durch einen Pfeil C gekennzeichnet und die Relativbewegung der Wuchshilfen 2 zu der Vorrichtung 1 durch einen Pfeil D, welche Relativbewegung entsprechend entgegengesetzt zu der Bewegungsrichtung C der Vorrichtung 1 verläuft.

An den Spalierdrähten anhaftende Pflanzenteile, insbesondere Rebentriebe werden somit zwischen den Einzugsrädern 7a und 7b hindurchgeführt und hierbei gegebenenfalls durch Zusammendrücken komprimiert und zu der Ablöseeinheit 4 (zusammen mit der sich relativ zu der Vorrichtung 1 hindurchbewegenden Wuchshilfe 2) zugeführt.

Die als Schneidmesser ausgebildeten, rotierenden Ablöseelemente 4a, 4b lösen die Pflanzenteile von den Wuchshilfen 2 ab, durch Häckseln, Abschlagen und/oder Zerstückeln.

Hinsichtlich dieses Grundaufbaus kann die Vorrichtung somit in EP 2 486 787 B1 aufgebaut sein. Insbesondere das untere Einzugsrad 7a kann als "Fingerrad" ausgebildet sein, wie in EP 2 486 787 B1 beschrieben.

Weiterhin ist vorteilhaft, dass die Vorrichtung gemäß der vorliegenden Erfindung zumindest zwei motorisch angetriebene Einführhilfen aufweist.

Diese Einführhilfen 12, 13 sind bei dem ersten Ausführungsbeispiel als motorisch angetriebene Walzen ausgebildet.

Wie in den Figuren 1 bis 6 ersichtlich, sind die Einführhilfen 12, 13 in Durchlaufrichtung D der Wuchshilfe 2 vor der Pflanzenführungseinheit 7 angeordnet.

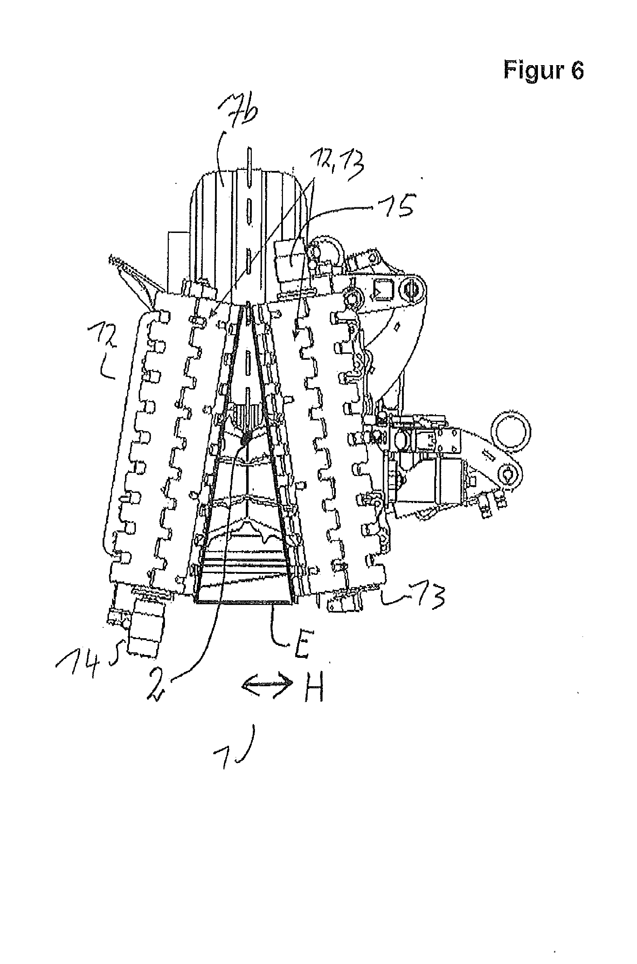

Wie insbesondere in Figur 6 ersichtlich, sind die Einführhilfen 12, 13 derart angeordnet und mit der Pflanzenführungseinheit 3 zusammenwirkend ausgebildet, dass bei Benutzung der Vorrichtung 1 die Wuchshilfe 2 zwischen den beiden Einführhilfen 12, 13 hindurch läuft, so dass die Einführhilfen 12, 13 einen Einführbereich von Wuchshilfe und Pflanzen in die Pflanzenführungseinheit 7 zumindest horizontal nach rechts und links begrenzen.

Der Einführbereich ist in Figur 6 als dick umrandetes Dreieck E dargestellt. Er wird horizontal (siehe Markierung H in Figur 6) nach rechts und links durch die Einführhilfen 12 und 13 begrenzt.

Wesentlich ist, dass die Wuchshilfeführung 3 eine Führungsrolle 3a für die Wuchshilfe umfasst. Diese Führungsrolle 3a ist insbesondere in den Figuren 4, 12 und 13 ersichtlich.

Die Führungsrolle 3a ist auf der gemeinsamen Welle 5 und drehbar relativ zu dieser Welle angeordnet. Die Welle 5 ist mittels des Ablöseeinheitmotors 6 drehbar. Führungsrolle 3a und Welle 5 weisen eine gemeinsame Drehachse auf, insbesondere ist die Führungsrolle 3a konzentrisch zu der Welle 5 angeordnet. Sofern die Welle 5 keinen runden Querschnitt, sondern beispielsweise einen mehreckigen, insbesondere sechseckigen Querschnitt aufweist, kann bevorzugt die Welle 5 im Bereich, in welchem die Führungsrolle 3a angeordnet ist, ein Wellenanpassungselement aufweisen, welches eine in etwa zylindrische Mantelfläche hat, so dass die Führungsrolle 3a auf der zylindrischen Mantelfläche in einfacher Weise drehbar gelagert angeordnet werden kann.

Wie beispielsweise in Figur 5 ersichtlich, wird die Wuchshilfe 2 insbesondere im Wirkungsbereich der Ablöseelemente 4a und 4b durch die Führungsrolle 3a geführt. Denn die Führungsrolle 3a befindet sich in axialer Richtung in etwa mittig zwischen den Ablöseelementen (siehe beispielsweise Figur 4). In Figur 4 ist eine Draufsicht von oben dargestellt, bei der die Ablöseelemente 4b und 4a zum weiteren Ablöseelemente auf einer Seite der Führungsrolle 3a ersichtlich sind. Auf der anderen Seite der Führungsrolle sind symmetrisch ebenso viele Ablöseelemente angeordnet, die jedoch in der Draufsicht gemäß Figur 4 durch die hochgeklappte Abdeckung verdeckt und darin nicht sichtbar sind.

Wie wiederum in Figur 5 ersichtlich, wird die Welle 5 und dementsprechend auch die Ablöseelemente 4a und 4b entsprechend der Drehrichtung A angetrieben. Da die Führungsrolle 3a jedoch drehbar auf der Welle 5 gelagert ist, kann sich die Führungsrolle 3a entgegen der Drehrichtung A drehen, um der Durchlaufrichtung D der Wuchshilfe 2 zu entsprechen. Hierdurch wird in einfacher Weise erzielt, dass aufgrund des mechanischen Kontaktes zwischen Wuchshilfe 2 und Führungsrolle 3a sich die Führungsrolle 3a mit einer Umfangsgeschwindigkeit dreht, welche der Relativgeschwindigkeit der Wuchshilfe 2 zu der Vorrichtung 1 entspricht, so dass kein oder nur ein geringfügiger mechanischer Abrieb zwischen Führungsrolle 3a und Wuchshilfe 2 entsteht.

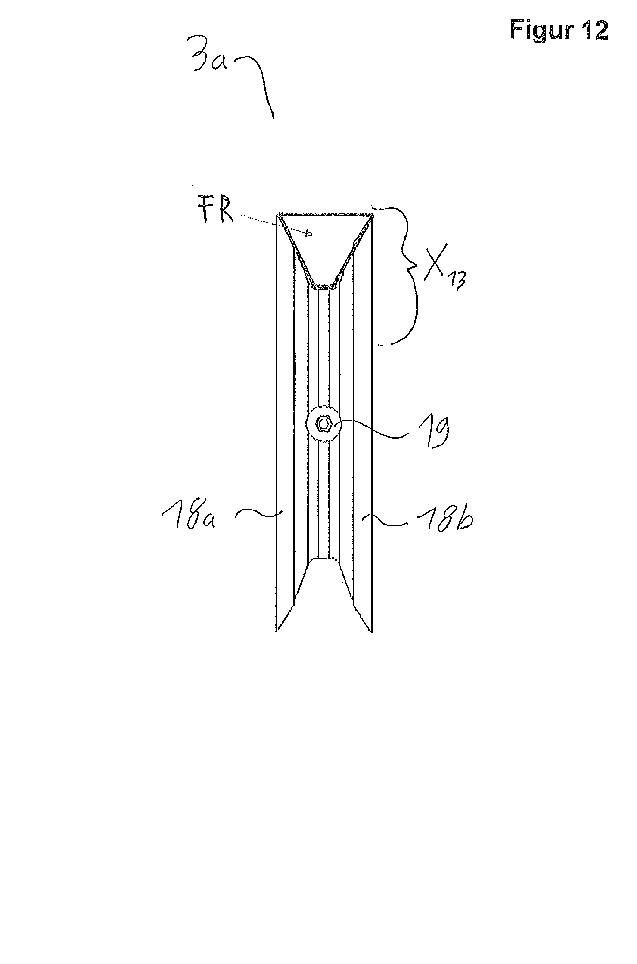

Figur 12 zeigt eine Draufsicht von vorne auf die Führungsrolle 3a. Hierbei ist ersichtlich, dass die Führungsrolle einen in etwa trapezförmigen Führungsbereich FR ausbildet.

Insbesondere weist die Führungsrolle in axialer Richtung an den Rändern einen von innen nach außen ansteigenden Durchmesser auf.

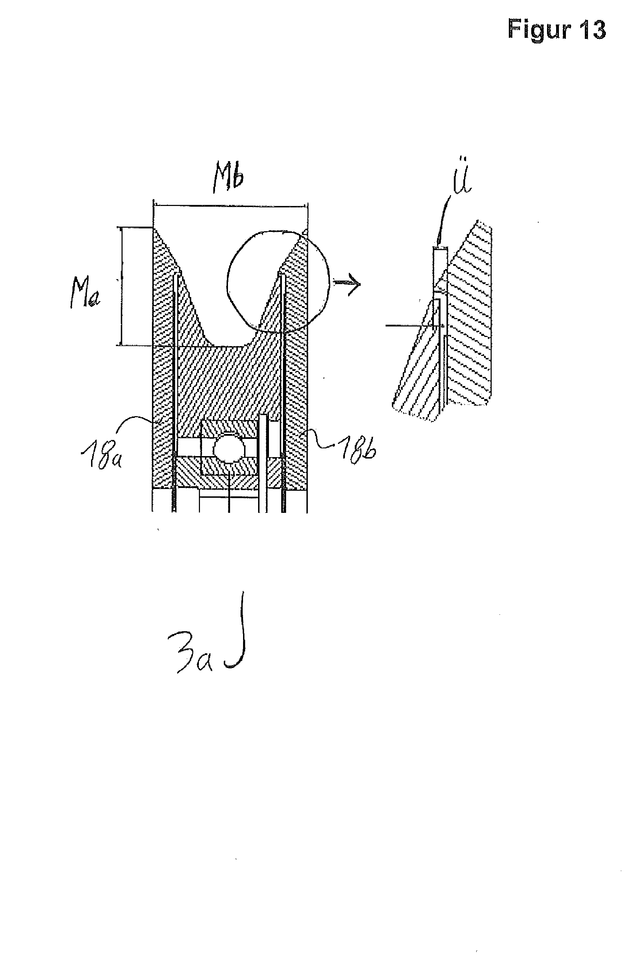

Die Vorrichtung 1 weist weiterhin in Axialrichtung jeweils seitlich neben der Führungsrolle 3a angeordnete Führungsscheiben 18a und 18b auf. Diese sind in Figur 4 aufgrund einer verkleinerten Darstellung entsprechend nur als dünne Elemente ersichtlich und besser in den Figuren 12 und 13 gemäß der vergrößerten Darstellung erkennbar. Die Führungsrolle 3a ist zwischen den Führungsscheiben 18a und 18b angeordnet. Die Führungsscheiben 18a und 18b sind jedoch drehfest mit der Welle 5 verbunden, so dass sich entsprechend bei Benutzung die Führungsscheiben 18a und 18b gemäß der Drehrichtung A in Figur 5 drehen und somit die gleiche Drehgeschwindigkeit wie die Ablöseelemente 4a, 4b, 4c und 4d aufweisen.

Zur besseren Darstellbarkeit der Ausgestaltung von Führungsrolle 3a und Führungsscheiben 18a und 18b ist in Figur 13 ein axialer Schnitt des mit X₁₃ in Figur 12 gekennzeichneten Bereichs dargestellt und zusätzlich in Figur 13 auf der rechten Seite eine Teilausschnittvergrößerung des auf der linken Seite eingekreisten Bereiches dargestellt.

Hierbei ist ersichtlich, dass die Führungsscheiben 18a und 18b einen größeren Radius als die Führungsrolle 3a aufweisen. Weiterhin übergreifen die Führungsscheiben die äußeren Ränder der Führungsrolle, siehe insbesondere den mit "Ü" in Figur 13 gekennzeichneten Übergreifungsbereich in der Ausschnittvergrößerung. In dem vorliegenden Ausführungsbeispiel übergreifen die Führungsscheiben die äußeren Ränder der Führungsrolle um etwa 2 mm.

Der axiale Abstand zwischen Führungsscheiben 18a und 18b und den axialen Außenflächen der Führungsrollen 3a beträgt vorliegend jeweils etwa 1,3 mm.

Weiterhin ist ein Führungskanal 3b vorgesehen, insbesondere in den Figuren 4 und 5 ersichtlich. Der Führungskanal 3b ist nach oben offen ausgebildet, mit einem in etwa U-förmigen Querschnitt. Wie in den Figuren 4 und 5 ersichtlich, ist der Führungskanal 3b in Durchlaufrichtung D der Wuchshilfe 2 nach der Führungsrolle 3a angeordnet, so dass die Wuchshilfe 2 mit anhaftenden Pflanzenteilen zunächst in den Wirkungsbereich der Ablöseeinheit 4 gelangt, so dass die Pflanzenteile durch die Ablöseelemente 4a und 4b abgetrennt werden. Anschließend durchläuft die Wuchshilfe 2, an der nun keine oder nur geringfügige Reste von Pflanzenteilen anhaften, den Führungskanal 3b. Der Führungskanal 3b ermöglicht somit eine zusätzliche Stabilisierung der Wuchshilfe 2 und aufgrund des Anordnens hinter der Führungsrolle 3 ist gewährleistet, dass keine unvorteilhafte Wechselwirkung zwischen Pflanzenteilen und Führungskanal 3b auftritt, welche zu einem verrutschen der Wuchshilfe 2 führen könnte.

Die in Figur 13 angegebenen Maßbereiche betragen Na = 33 mm und Nb = 43,6 mm.

In Figur 12 ist weiterhin eine Schmiermittelöffnung 19 ersichtlich, um Schmiermittel zu einer Kugellagerung zwischen Führungsrolle 3a und Welle 6 hinzugeben zu können.

Die Einführhilfen 12 und 13 sind mittels zweier Einführhilfenmotoren 14 und 15, weiche als Hydromotoren ausgebildet sind, angetrieben. Bei Benutzung drehen sich die Einführhilfen 12, 13 gegenläufig, wie in Figur 3 durch entsprechende Pfeile angedeutet. Analog zu den Drehrichtungen von unterem Einzugsrad 7a und oberem Einzugsrad 7b ist auch die Drehrichtung der Einführhilfen 12 und 13 derart gewählt, dass die der Wuchshilfe 2 zugewandten Seiten der Einführhilfen 12 und 13 sich jeweils in Durchlaufrichtung D der Wuchshilfe 2 drehen.

Die Vorrichtung 1 weist weiterhin eine nicht dargestellte Steuereinheit auf. Diese steuert die Drehgeschwindigkeit der Einführhilfen 12, 13 und bevorzugt auch der Einzugsräder 7a und 7b. Der Nutzer gibt manuell die Drehgeschwindigkeit mittels der Steuereinheit vor, bevorzugt derart, dass die Umfangsgeschwindigkeit in etwa der Fahrgeschwindigkeit eines die Vorrichtung 1 tragenden Traktors entspricht. Alternativ kann die Steuereinheit mit einem Geschwindigkeitsmesssystem des Traktors verbunden sein und die Drehgeschwindigkeit der Einführhilfen 12, 13 und bevorzugt auch der Einzugsräder 7a und 7b wird automatisch derart gesteuert, dass die Umfangsgeschwindigkeit in etwa der Fahrgeschwindigkeit des Traktors entspricht.

Die jeweils der Wuchshilfe 2 zugewandte Seite der Einführhilfen 12, 13 und der Einzugsräder 7a, 7b weist somit in etwa die gleiche Geschwindigkeit auf, mit welcher die Wuchshilfe 2 durch die Vorrichtung 1 hindurchläuft, so dass keine zusätzlichen Kräfte aufgrund einer Relativbewegung zwischen Umfang der Einführhilfen 12, 13 und Einzugsräder 7a, 7b und Wuchshilfe 2 auf die Wuchshilfe einwirken.

Wie in den Figuren 4 und 6 ersichtlich, ist durch Wuchshilfeführung 3, Einzugsräder 7a und 7b sowie die Einführhilfen 12 und 13 ein Begrenzungsraum für in etwa geradlinige (bei Draufsicht von oben gemäß Figur 4) Verläufe der Wuchshilfe 2 ausgebildet. Dieser Begrenzungsraum ist in Figur 4 durch gepunktete Linien angedeutet.

In horizontaler Richtung H wird der Begrenzungsraum somit in etwa durch die Wuchshilfeführung 3 als Spitze eines Dreiecks sowie die Einführhilfen 12 und 13 begrenzt. Nach oben und unten wird der Begrenzungsraum durch die Einzugsräder 7a und 7b begrenzt sowie dadurch, dass aufgrund der Schwerkraft und der Spannung der Wuchshilfe 2 diese nach unten gezogen wird.

Der Begrenzungsraum weist somit eine Querschnittsfläche senkrecht zu der Wuchshilfe 2 auf, die im Einzugsbereich zwischen den Einführhilfen 12 und 13 die größte Fläche aufweist und hiervon ausgehend bis zu der Wuchshilfeführung 3, insbesondere dem Führungsbereich FR der Führungsrolle 3a abnimmt.

Wie in Figur 4 ersichtlich erfolgt die Zusammenwirkung derart, dass der Begrenzungsraum nicht mit dem Wirkungsbereich der Ablöseelemente (insbesondere des Ablöseelementes 4a) der Ablöseeinheit 4 überlappt. Die rotierenden Ablöseelemente greifen somit nicht in den Begrenzungsraum ein, so dass eine Beschädigung der Wuchshilfe 2 durch die Ablöseelemente 4a, 4b, 4c, 4d vermieden wird.

Der Öffnungswinkel α zwischen einer Seite des Begrenzungsraums und der Wuchshilfe 2 beträgt etwa 5° (die Figuren sind nicht maßstabsgetreu). Insbesondere können die Einführhilfen 12 und 13 derart angeordnet sein, dass der Winkel α, welcher maßgeblich durch die Position der Einführhilfe 12 zu der Wuchshilfe 3 bestimmt wird, unterschiedlich zu einem Öffnungswinkel β, welcher maßgeblich durch die Einführhilfe 13 und die Wuchshilfe 3 bestimmt ist. Vorzugsweise liegt die Summe von α und β im Bereich 5° bis 80°, insbesondere im Bereich 10° bis 60°. Insbesondere bevorzugt sind die beiden Winkel α und β gleich.

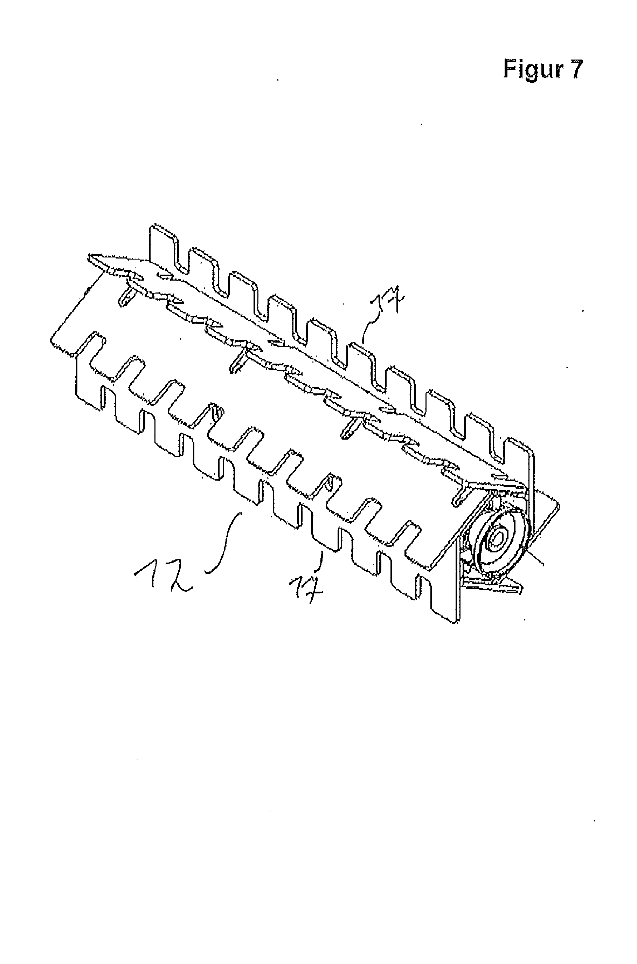

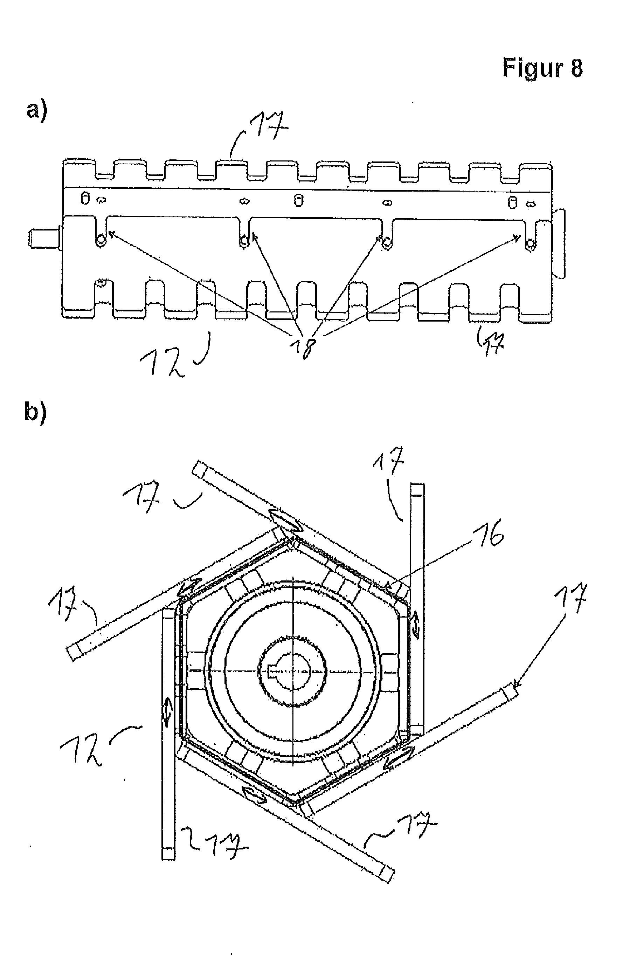

In den Figuren 7, 8a und 8b ist jeweils die Einführhilfe 12 (ohne Motor 14) dargestellt.

Wie insbesondere in Figur 8b ersichtlich, weist die Einführhilfe 12 einen zylindrischen Aufbau auf, mit einem regelmäßigen Sechs-Eck (16) als Querschnittsfläche. An diesem zylindrischen Grundaufbau sind kammartige, nach außen vorstehende Transporthilfen 17 angeordnet. Die Transporthilfen 17 sind aus einem flexiblen Material, beispielsweise faserverstärkter Gummi ausgebildet und weisen Langlöcher 18 auf. Mittels (nicht dargestellter) Schrauben lassen sich bei Lösen der Schrauben die Transporthilfen 17 jeweils parallel zu der dieser Transporthilfe zugeordneten Fläche des Sechsecks bewegen. In Figur 8b sind beispielhaft Bewegungsrichtungen durch Pfeile in den Transporthilfen 17 angedeutet.

Nach Verschieben der Transporthilfen 17 können durch Anziehen der Schrauben die Transporthilfen wiederum fest an dem zylindrischen Grundaufbau fixiert werden.

Durch das Verschieben der Transporthilfen durch den Benutzer kann der Radius des Umkreises der Einführhilfe verändert werden und somit der wirksame Durchmesser, mit welchem die die Einführhilfen auf die Pflanzenteile einwirken. Hiermit kann somit die "Aggressivität", mit welcher die Transporthilfen an den Pflanzenteilen, welche an der Wuchshiife 2 anhaften, angreifen, variiert werden.

Die Einführhilfen 12, 13 sind mittels metallischer Stangen mit dem Grundgehäuse der Vorrichtung 1 verbunden. An den jeweiligen Verbindungsstellen sind Langlöcher vorgesehen, so dass durch Lösen von Befestigungsschrauben eine Justierung insbesondere des Winkels von Einführhilfe 12 und Einführhilfe 13 zu dem Grundgehäuse der Vorrichtung 1 möglich ist.

Der Abstand X gemäß Figur 2 zwischen den Drehachsen der Einführhilfen 12, 13 und der Drehachse des Einzugsrads 7a kann im Bereich 30 bis 80 cm liegen. Vorliegend beträgt der Abstand etwa 40 cm.

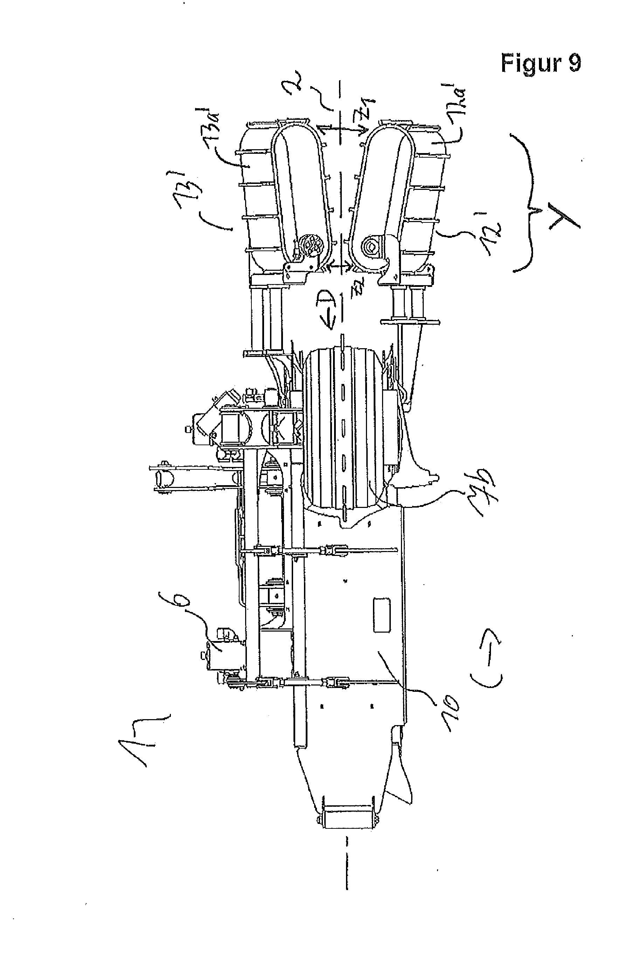

In den Figuren 9 bis 11 ist ein zweites Ausführungsbeispiel einer erfindungsgemäßen Vorrichtung dargestellt. Der Grundaufbau gleicht dem Grundaufbau des ersten Ausführungsbeispiels, insbesondere ist Figur 9 grundsätzlich mit Figur 3, Figur 10 und Figur 2 und Figur 11 mit Figur 6 vergleichbar. Gleiche Bezugszeichen bezeichnen gleiche oder gleichwirkende Elemente. Zur Vermeidung von Wiederholungen wird nachfolgend daher lediglich auf die wesentlichen Unterschiede eingegangen:

Das zweite Ausführungsbeispiel einer erfindungsgemäßen Vorrichtung weist Einführhilfen 12' und 13' auf. Diese Einführhilfen umfassen jeweils ein Förderband 12a' und 13a'.

Die Förderbänder werden von Hydromotoren 14 und 15 gegensinnig angetrieben. Entsprechende Rollen zur Lagerung der Förderbänder sind in den Figuren 9 bis 11 aus Gründen der besseren Übersichtlichkeit nicht dargestellt.

Die Funktionsweise des zweiten Ausführungsbeispiels ist analog zu der zuvor beschriebenen Funktionsweise des ersten Ausführungsbeispiels. Das zweite Ausführungsbeispiel weist jedoch den Vorteil auf, dass verglichen mit den als Walzen ausgebildeten Einführhilfen 12 und 13 über eine größere Strecke eine Interaktion zwischen Pflanzenteilen und Einführhilfen erfolgt: Wie in Figur 9 ersichtlich, kann über eine Förderstrecke Y eine Einwirkung zwischen den Förderbändern 12a' und 13a' und den an der Wuchshilfe 2 anhaftenden Pflanzenteilen erfolgen.

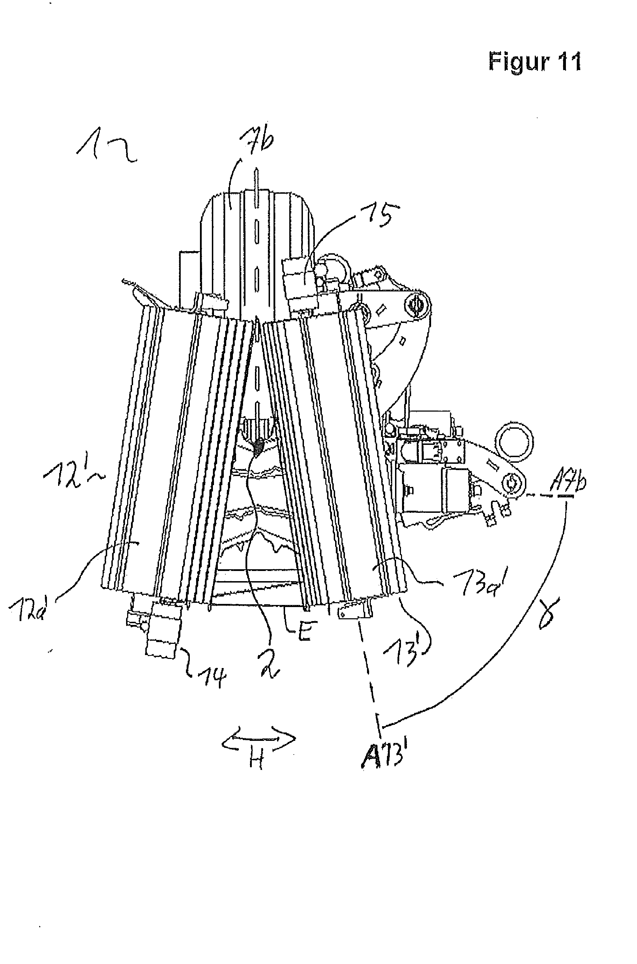

Wie in Figur 11 ersichtlich, sind bei Draufsicht von vorne die Einführhilfen 12' und 13' analog zu den Einführhilfen 12 und 13 zueinander geneigt angeordnet und bilden somit zusammen mit einer (nicht dargestellten) Wuchshilfeführung 3 einen Begrenzungsraum wie bei dem ersten Ausführungsbeispiel beschrieben.

Darüber hinaus sind in diesem zweiten Ausführungsbeispiel die Einführhilfen 12' und 13' jedoch auch in Draufsicht von oben gemäß Figur 9 in Durchlaufrichtung D zulaufend angeordnet, so dass ein Abstand Z1 an einem vorderen Ende der Einführhilfen 12' und 13' größer ist als ein Abstand Z2 an einem hinteren Ende der Einführhilfen 12' und 13'. Hierdurch wird somit eine Vorkomprimierung der Pflanzenteile erwirkt, bevor die Pflanzenteile der Pflanzenführungseinheit 7 mit den Einzugsrädern 7a und 7b für eine weitere Komprimierung zugeführt werden. Insbesondere erfolgt die erste Komprimierung in etwa senkrecht zu der zweiten Komprimierung, da die Drehachsen der Rollen der Förderbänder 12a' und 13a' in etwa senkrecht zu den Drehachsen der Einzugsräder 7a und 7b stehen, d. h. zu diesem zumindest einen Winkel im Bereich 45 bis 90°, vorzugsweise 50° bis 80° aufweisen. Beispielhaft ist in Figur 11 ein solcher Winkel γ zwischen einer Drehachse A 7b des unteren Einzugsrads 7b und einer Drehachse A 13' einer Rolle der Einführhilfe 13' eingezeichnet.

Die Funktionsweise und Ausgestaltung der Wuchshilfe 3 mit Führungsrolle 3a und Führungskanal 3b sowie der Führungsscheiben 18a und 18b ist bei dem ersten und bei dem zweiten Ausführungsbeispiel gleich.

## Patentansprüche

1. Vorrichtung (1) zum Entfernen von Pflanzenteilen von mindestens einer länglichen, zugstabilen, biegeschlaffen Wuchshilfe (2) während einer Bewegung der Vorrichtung (1) entlang der Wuchshiife (2), insbesondere zum Entfernen von Rebentrieben von mindestens einem Spalierdraht, umfassend
- eine Wuchshilfeführung (3), zum Führen der Wuchshilfe (2) während der Bewegung der Vorrichtung (1) entlang der Wuchshilfe (2),
- eine Ablöseeinheit (4) und
- eine Pflanzenführungseinheit (7) zum Komprimieren und/oder Zuführen der an der Wuchshilfe (2) anhaftenden Pflanzenteile zu der Ablöseeinheit (4),
welche Ablöseeinheit (4) mindestens ein Ablöseelement umfasst, welches Ablöseelement derart beweglich an der Vorrichtung (1) angeordnet ist, dass bei Betrieb durch Bewegung des Ablöseelementes Pflanzenteile von der Wuchshilfe (2) zumindest teilweise ablösbar sind und
welches Ablöseelement auf einer Welle (5) angeordnet ist, welche Welle (5) mittels eines motorischen Antriebs der Vorrichtung drehbar ist, **dadurch gekennzeichnet,**
**dass** die Wuchshilfeführung (3) zumindest eine Führungsrolle (3a) für die Wuchshilfe (2) umfasst, welche Führungsrolle (3a) drehbar relativ zu der Welle (5) angeordnet ist, wobei Führungsrolle (3a) und Welle (5) eine gemeinsame Drehachse aufweisen.

2. Vorrichtung (1) nach Anspruch 1,
**dadurch gekennzeichnet,**
**dass** die Führungsrolle (3a) konzentrisch zu der Welle (5) angeordnet ist.

3. Vorrichtung (1) nach einem der vorangegangenen Ansprüche,
**dadurch gekennzeichnet,**
**dass** die Führungsrolle (3a) in axialer Richtung an den Rändern einen größeren Durchmesser aufweist, als in einem inneren Führungsbereich, insbesondere,
**dass** die Führungsrolle (3a) in axialer Richtung an den Rändern jeweils einen von innen nach außen ansteigenden Durchmesser, vorzugsweise monoton ansteigenden Durchmesser, insbesondere streng monoton ansteigenden Durchmesser, bevorzugt linear ansteigenden Durchmesser aufweist.

4. Vorrichtung (1) nach Anspruch 3,
**dadurch gekennzeichnet,**
**dass** die Führungsrolle (3a) in einem axialen Querschnitt einen in etwa trapezförmigen Führungsbereich ausbildet.

5. Vorrichtung (1) nach einem der vorangegangenen Ansprüche,
**dadurch gekennzeichnet,**
**dass** die Führungsrolle (3a) zumindest an den äußeren Umfangslinien abgerundete Kanten aufweist, vorzugsweise, dass alle bei Benutzung der Wuchshilfe (2) zugewandten Kanten der Führungsrolle (3a) abgerundet sind.

6. Vorrichtung (1) nach einem der vorangegangenen Ansprüche,
**dadurch gekennzeichnet**,
die Wuchshilfeführung (3) zumindest teilweise im Wirkungsbereich des Ablöseelementes angeordnet ist.

7. Vorrichtung (1) nach einem der vorangegangenen Ansprüche,
**dadurch gekennzeichnet,**
**dass** die Wuchshilfeführung (3) zusätzlich einen Wuchshilfekanal, bevorzugt mit einem nach oben offen Querschnitt, insbesondere einem in etwa U-förmigen Querschnitt aufweist.

8. Vorrichtung (1) nach Anspruch 7,
**dadurch gekennzeichnet,**
**dass** der Wuchshilfekanal in Bewegungsrichtung der Wuchshilfe (2) nach der Führungsrolle (3a) angeordnet ist.

9. Vorrichtung (1) nach einem der vorangegangenen Ansprüche,
**dadurch gekennzeichnet,**
**dass** die Vorrichtung (1) zumindest zwei Führungsscheiben (18a, 18b) umfasst, welche Führungsscheiben (18a, 18b) drehfest auf der Welle (5) angeordnet sind.

10. Vorrichtung (1) nach Anspruch 9,
**dadurch gekennzeichnet,**
**dass** die Führungsrolle (3a) zwischen den Führungsscheiben (18a, 18b) angeordnet ist.

11. Vorrichtung (1) nach Anspruch 10,
**dadurch gekennzeichnet, dass** die Führungsscheiben (18a, 18b) einen axialen Abstand im Bereich von 0,1 mm bis 20 mm, bevorzugt 0,2 mm bis 10 mm, weiter bevorzugt 0,3 mm bis 7 mm zu der Führungsrolle (3a) aufweisen.

12. Vorrichtung (1) nach einem der Ansprüche 9 bis 11,
**dadurch gekennzeichnet,**
**dass** die Führungsscheiben (18a, 18b) die äußeren Ränder der Führungsrolle (3a) übergreifen, insbesondere in Axialrichtung eine Länge im Bereich 1 mm bis 20 mm, bevorzugt 2 mm bis 10 mm übergreifen.

13. Vorrichtung (1) nach einem der Ansprüche 9 bis 12,
**dadurch gekennzeichnet,**
**dass** die äußeren Führungsscheiben (18a, 18b) einen größeren Durchmesser als die Führungsrolle (3a) aufweisen.

14. Vorrichtung (1) nach einem der vorangegangenen Ansprüche,
**dadurch gekennzeichnet,**
**dass** in Durchlaufrichtung der Wuchshilfe (2) die Pflanzenführungseinheit (7) vor der Ablöseeinheit (4) und vor der Wuchshilfeführung (3) angeordnet ist und
**dass** die Vorrichtung (1) zumindest zwei motorisch angetriebene Einführhilfen (12, 13, 12', 13') aufweist, die in Durchlaufrichtung der Wuchshilfe (2) vor der Pflanzenführungseinheit (7) angeordnet sind und
die Einführhilfen derart angeordnet und mit der Pflanzenführungseinheit (7) zusammenwirkend ausgebildet sind, dass bei Benutzung der Vorrichtung (1) die Wuchshilfe (2) zwischen den beiden Einführhilfen hindurchläuft, so dass die Einführhilfen den Einführbereich von Wuchshilfe (2) und Pflanzen in die Pflanzenführungseinheit (7) zumindest horizontal nach rechts und links begrenzen.

15. Vorrichtung (1) nach Anspruch 14,
**dadurch gekennzeichnet,**
**dass** Einführhilfen (12, 13, 12', 13') und die Wuchshilfeführung (3) derart angeordnet und zusammenwirkend ausgebildet sind, dass durch die Einführhilfen und Wuchshilfeführung (3) ein Begrenzungsraum für in etwa geradlinige Verläufe der Wuchshilfe (2) ausgebildet ist, welcher Begrenzungsraum nicht mit dem Wirkungsbereich eines Ablöseelementes (4a, 4b) der Ablöseeinheit (4) überlappt.

## Claims

1. Device (1) for removing plant parts from at least one elongate, tensile-resistant, flexible growth support (2) during movement of the device (1) along the growth support (2), especially for removing vine shoots from at least one trellis wire,
comprising
- a growth support guide means (3), for guiding the growth support (2) during the movement of the device (1) along the growth support (2),
- a stripping unit (4) and
- a plant guide unit (7) for compressing and/or supplying the plant parts adhering to the growth support (2) to the stripping unit (4),
which stripping unit (4) comprises at least one stripping element, which stripping element is arranged on the device (1) so as to be movable in such a way that, during operation, plant parts are at least partly strippable from the growth support (2) by movement of the stripping element, and
which stripping element is arranged on a shaft (5), which shaft (5) is rotatable by means of a motor drive means of the device, **characterised in that**
the growth support guide means (3) comprises at least one guide roller (3a) for the growth support (2), which guide roller (3a) is arranged so as to be rotatable relative to the shaft (5), the guide roller (3a) and the shaft (5) having a common rotational axis.

2. Device (1) according to claim 1,
**characterised in that**
the guide roller (3a) is arranged concentrically with respect to the shaft (5).

3. Device (1) according to either one of the preceding claims,
**characterised in that**
the guide roller (3a), in the axial direction, has a larger diameter at the rims than in an inner guide region, especially,
the guide roller (3a), in the axial direction, has at each of the rims a diameter that increases from inside to outside, preferably a monotonically increasing diameter, especially a strictly monotonically increasing diameter, preferably a linearly increasing diameter.

4. Device (1) according to claim 3,
**characterised in that**
the guide roller (3a) in an axial cross-section forms an approximately trapezoidal guide region.

5. Device (1) according to any one of the preceding claims,
**characterised in that**
the guide roller (3a) has rounded edges at least on its outer peripheries, preferably all the edges of the guide roller (3a) that face the growth support (2) during use being rounded.

6. Device (1) according to any one of the preceding claims,
**characterised in that**
the growth support guide means (3) is arranged at least partly in the operating region of the stripping element.

7. Device (1) according to any one of the preceding claims,
**characterised in that**
the growth support guide means (3) additionally has a growth support channel, preferably having a cross-section that is open towards the top, especially an approximately U-shaped cross-section.

8. Device (1) according to claim 7,
**characterised in that**
the growth support channel is arranged after the guide roller (3a) in the direction of movement of the growth support (2).

9. Device (1) according to any one of the preceding claims,
**characterised in that**
the device (1) comprises at least two guide discs (18a, 18b), which guide discs (18a, 18b) are arranged on the shaft (5) for conjoint rotation therewith.

10. Device (1) according to claim 9,
**characterised in that**
the guide roller (3a) is arranged between the guide discs (18a, 18b).

11. Device (1) according to claim 10,
**characterised in that**
the guide discs (18a, 18b) have an axial spacing in the range of from 0.1 mm to 20 mm, preferably from 0.2 mm to 10 mm, more preferably from 0.3 mm to 7 mm, from the guide roller (3a).

12. Device (1) according to any one of claims 9 to 11,
**characterised in that**
the guide discs (18a, 18b) overlap the outer rims of the guide roller (3a), especially overlap a length in the range of from 1 mm to 20 mm, preferably from 2 mm to 10 mm, in the axial direction.

13. Device (1) according to any one of claims 9 to 12,
**characterised in that**
the outer guide discs (18a, 18b) have a larger diameter than the guide roller (3a).

14. Device (1) according to any one of the preceding claims,
**characterised in that**
in the throughput direction of the growth support (2) the plant guide unit (7) is arranged before the stripping unit (4) and before the growth support guide means (3), and
the device (1) has at least two motor-driven introduction aids (12, 13, 12', 13') which are arranged before the plant guide unit (7) in the throughput direction of the growth support (2) and
the introduction aids are arranged and configured so as to co-operate with the plant guide unit (7) in such a way that, when the device (1) is in use, the growth support (2) passes between the two introduction aids so that the introduction aids delimit the region of introduction of the growth support (2) and the plants into the plant guide unit (7) at least horizontally to the right and left.

15. Device (1) according to claim 14,
**characterised in that**
introduction aids (12, 13, 12', 13') and the growth support guide means (3) are arranged and configured so as to co-operate in such a way that the introduction aids and the growth support guide means (3) form a delimitation zone for approximately linear paths of the growth support (2), which delimitation zone does not overlap the operating region of a stripping element (4a, 4b) of the stripping unit (4).

## Revendications

1. Dispositif (1) pour supprimer des éléments de plantes d'au moins une aide à la croissance (2) oblongue, stable en traction et molle en flexion, pendant un déplacement du dispositif (1) le long de l'aide à la croissance (2), en particulier pour supprimer des rejets de vigne d'au moins un fil métallique d'espalier,
comprenant
- un guide (3) d'aide à la croissance, pour guider l'aide à la croissance (2) pendant le déplacement du dispositif (1) le long de l'aide à la croissance (2),
- une unité de détachement (4) et
- une unité (7) de guidage de plantes pour comprimer et/ou apporter à l'unité de détachement (4) les éléments de plantes adhérant à l'aide à la croissance (2),
ladite unité de détachement (4) comprenant au moins un élément de détachement qui est disposé à déplacement sur le dispositif (1) de telle sorte qu'en service, par le déplacement de l'élément de détachement, des éléments de plantes peuvent être au moins partiellement détachés de l'aide à la croissance (2),
et ledit élément de détachement étant disposé sur un arbre (5) qui est rotatif au moyen d'un entraînement motorisé du dispositif,
**caractérisé en ce que** le guide (3) d'aide à la croissance comprend au moins un rouleau de guidage (3a) pour l'aide à la croissance (2), ledit rouleau de guidage (3a) étant disposé à rotation par rapport à l'arbre (5), sachant que le rouleau de guidage (3a) et l'arbre (5) présentent un axe de rotation commun.

2. Dispositif (1) selon la revendication 1, **caractérisé en ce que** le rouleau de guidage (3a) est disposé concentriquement par rapport à l'arbre (5).

3. Dispositif (1) selon l'une des revendications précédentes, **caractérisé en ce que** le rouleau de guidage (3a) présente en direction axiale sur les bords un plus grand diamètre que dans une région de guidage intérieure,
en particulier **en ce que** le rouleau de guidage (3a) présente en direction axiale sur les bords un diamètre respectif augmentant de l'intérieur vers l'extérieur, de préférence un diamètre augmentant de façon monotone, en particulier un diamètre augmentant de façon strictement monotone, d'une manière préférée un diamètre augmentant linéairement.

4. Dispositif (1) selon la revendication 3, **caractérisé en ce que** le rouleau de guidage (3a) forme dans une section axiale une région de guidage approximativement trapézoïdale.

5. Dispositif (1) selon l'une des revendications précédentes, **caractérisé en ce que** le rouleau de guidage (3a) présente des arêtes arrondies au moins sur les lignes périphériques extérieures, de préférence **en ce que** toutes les arêtes du rouleau de guidage (3a) qui sont tournées en utilisation vers l'aide à la croissance (2) sont arrondies.

6. Dispositif (1) selon l'une des revendications précédentes, **caractérisé en ce que** le guide (3) d'aide à la croissance est disposé au moins partiellement dans la zone d'action de l'élément de détachement.

7. Dispositif (1) selon l'une des revendications précédentes, **caractérisé en ce que** le guide (3) d'aide à la croissance présente en plus un canal d'aide à la croissance, de préférence avec une section ouverte vers le haut, en particulier une section approximativement en forme de U.

8. Dispositif (1) selon la revendication 7, **caractérisé en ce que** le canal d'aide à la croissance est disposé après le rouleau de guidage (3a) dans la direction de déplacement de l'aide à la croissance (2).

9. Dispositif (1) selon l'une des revendications précédentes, **caractérisé en ce que** le dispositif (1) comprend au moins deux disques de guidage (18a, 18b), lesdits disques de guidage (18a, 18b) étant disposés en solidarité de rotation sur l'arbre (5).

10. Dispositif (1) selon la revendication 9, **caractérisé en ce que** le rouleau de guidage (3a) est disposé entre les disques de guidage (18a, 18b).

11. Dispositif (1) selon la revendication 10, **caractérisé en ce que** les disques de guidage (18a, 18b) présentent une distance axiale par rapport au rouleau de guidage (3a) dans la plage de 0,1 mm à 20 mm, de préférence de 0,2 mm à 10 mm, d'une manière encore plus préférée de 0,3 mm à 7 mm.

12. Dispositif (1) selon l'une des revendications 9 à 11, **caractérisé en ce que** les disques de guidage (18a, 18b) engagent en recouvrement les bords extérieurs du rouleau de guidage (3a), en particulier engagent en recouvrement en direction axiale une longueur dans la plage de 1 mm à 20 mm, de préférence de 2 mm à 10 mm.

13. Dispositif (1) selon l'une des revendications 9 à 12, **caractérisé en ce que** les disques de guidage extérieurs (18a, 18b) présentent un plus grand diamètre que le rouleau de guidage (3a).

14. Dispositif (1) selon l'une des revendications précédentes, **caractérisé en ce que** l'unité (7) de guidage de plantes est disposée avant l'unité de détachement (4) et avant le guide (3) d'aide à la croissance dans la direction de passage de l'aide à la croissance (2),
et **en ce que** le dispositif (1) présente au moins deux aides à l'introduction (12, 13, 12', 13') entraînées par moteur, qui sont disposées avant l'unité (7) de guidage de plantes dans la direction de passage de l'aide à la croissance (2),
et les aides à l'introduction sont disposées et sont conçues pour coopérer avec l'unité (7) de guidage de plantes de telle sorte que, lors de l'utilisation du dispositif (1), l'aide à la croissance (2) passe entre les deux aides à l'introduction, de sorte que les aides à l'introduction délimitent au moins horizontalement vers la gauche et la droite la zone d'introduction de l'aide à la croissance (2) et des plantes dans l'unité (7) de guidage de plantes.

15. Dispositif (1) selon la revendication 14, **caractérisé en ce que** les aides à l'introduction (12, 13, 12', 13') et le guide (3) d'aide à la croissance sont disposés et sont conçus pour coopérer de telle sorte que les aides à l'introduction et le guide (3) d'aide à la croissance forment un espace de délimitation pour des allures approximativement rectilignes de l'aide à la croissance (2), lequel espace de délimitation ne se chevauche pas avec la zone d'action d'un élément de détachement (4a, 4b) de l'unité de détachement (4).
